# EUROPEAN PATENT APPLICATION

(11) **EP 4 697 092 A1**
(43) Date of publication of application: **18.02.2026**
(21) Application number: 24867513.4
(22) Date of filing: 19.09.2024
(51) Int. Cl.: G03B 5/00, G02B 7/04

(54) **DRIVING MOTOR AND RELATED PRODUCT THEREOF**

(30) Priority: 21.09.2023 CN 202311227283
(71) Applicant: Huawei Technologies Co., Ltd., Shenzhen, Guangdong 518129 (CN)
(72) Inventor: WANG, Wei, Shenzhen, Guangdong 518129 (CN); WANG, Jianwen, Shenzhen, Guangdong 518129 (CN); QIN, Shixin, Shenzhen, Guangdong 518129 (CN); SEKIGUCHI, Naoki, Shenzhen, Guangdong 518129 (CN); YANG, Zhitao, Shenzhen, Guangdong 518129 (CN)
(74) Representative: Thun, Clemens
(86) International application number: PCT/CN2024/119848
(87) International publication number: WO 2025/061108

(57) **Abstract**

This application provides a drive motor and a related product thereof. The drive motor has a light inlet and a light outlet. The drive motor includes: a base; a first bracket movably connected to the base, where the first bracket includes a mounting oblique surface, a side that is of the mounting oblique surface and that faces the light inlet and the light outlet is a mounting side, and the mounting side is configured to mount a first optical element; and a first drive mechanism, configured to drive the first bracket to rotate around a first axis relative to the base, where the first axis is parallel to the mounting oblique surface. Light is emitted into the drive motor from the light inlet in a first direction, and is emitted out of the drive motor from the light outlet in a second direction after reflecting off the first optical element. The first direction intersects with the second direction, and the first axis is located on the mounting side of the mounting oblique surface, and is perpendicular to a plane on which the first direction and the second direction are located. The drive motor in this application has a smaller focus shift, higher image stabilization precision, and better imaging quality.

## Description

This application claims priority to Chinese Patent Application No. 202311227283.9, filed with the China National Intellectual Property Administration on September 21, 2023, and entitled "DRIVE MOTOR AND RELATED PRODUCT THEREOF", which is incorporated herein by reference in its entirety.

### TECHNICAL FIELD

This application relates to the field of image shooting, and in particular, to a drive motor and a related product thereof.

### BACKGROUND

With popularization and development of smartphones, mobile photography has become a commonly used shooting method, and users increasingly demand higher imaging quality from their electronic devices. Currently, long-focus lenses on the market typically use a periscope structure for miniaturization. The periscope structure typically includes an optical folding element and a lens group that are arranged from an object side to an image side, and the optical folding element is driven by an image stabilization motor to move, to achieve optical image stabilization. However, driving precision of a current image stabilization motor is relatively low, resulting in a significant focus shift and degraded final image quality.

### SUMMARY

Implementations of this application provide a drive motor and a related product including the drive motor, to provide a drive motor and a related product with high image stabilization precision and a small focus shift.

According to a first aspect, a drive motor is provided. The drive motor has a light inlet and a light outlet. The drive motor includes: a base; a first bracket movably connected to the base, where the first bracket includes a mounting oblique surface, a side that is of the mounting oblique surface and that faces the light inlet and the light outlet is a mounting side, and the mounting side is configured to mount a first optical element; and a first drive mechanism, configured to drive the first bracket to rotate around a first axis relative to the base, where the first axis is parallel to the mounting oblique surface. Light is emitted into the drive motor from the light inlet in a first direction, and is emitted out of the drive motor from the light outlet in a second direction after reflecting off the first optical element. The first direction intersects with the second direction, and the first axis is located on the mounting side of the mounting oblique surface, and is perpendicular to a plane on which the first direction and the second direction are located.

It may be understood that, in some designs in which a drive motor drives the first optical element to rotate around the first axis relative to the base to achieve optical image stabilization, a focus shift is relatively large, leading to a significant decrease in a modulation transfer function of the entire camera module, low image stabilization precision, and degraded imaging quality, where the first axis is perpendicular to the plane on which the first direction and the second direction are located, and the first axis is located on the mounting oblique surface of a mover or located on a side that is of the mounting oblique surface and that faces away from the light outlet. In contrast, in this implementation, the first axis of the drive motor is located on a side that is of the mounting oblique surface and that is close to the light outlet, namely, the mounting side of the mounting oblique surface. The first axis is perpendicular to the plane on which the first direction and the second direction are located. In this way, when the drive motor drives the first optical element to rotate around the first axis, the focus shift is small, so that impact of the focus shift on the modulation transfer function can be effectively reduced. This helps improve image stabilization precision of the entire camera module and improve imaging quality.

In a possible implementation, the drive motor further includes a second bracket and a second drive mechanism, the second bracket is movably connected between the base and the first bracket, the second drive mechanism is configured to drive the second bracket and the first bracket to rotate around a second axis relative to the base, and the second axis passes through the mounting oblique surface and is parallel to the second direction.

It may be understood that, in some designs in which a drive motor drives the first optical element to rotate around the second axis to achieve optical image stabilization, where the second axis is parallel to the first direction, such stabilization results in a tilt between an emergent surface of the first optical element and an incident surface of a subsequent focusing component. This leads to a significant decrease in the modulation transfer function of the entire camera module, low image stabilization precision, and degraded imaging quality. In contrast, in this implementation, the second axis of the drive motor is parallel to the second direction. When the first optical element is driven by the drive motor to rotate around the second axis to perform image stabilization, the emergent surface of the first optical element is kept to be parallel to the incident surface of the subsequent focusing component, so that overall image stabilization precision of the drive motor can be effectively improved, and impact on the modulation transfer function can be reduced. This helps improve imaging quality of the camera module.

In a possible implementation, a first connection part and a second connection part are disposed on a side that is of the first bracket and that is close to the light outlet, the first connection part and the second connection part are disposed opposite to and spaced from each other, and an arrangement direction of the first connection part and the second connection part is parallel to the first axis. The drive motor further includes a first group of support pieces, the first group of support pieces includes a plurality of first support pieces, a part of the first support pieces are connected between the first connection part and the second bracket, and another part of the first support pieces are connected between the second connection part and the second bracket. In this way, the first connection part of the first bracket may be movably connected to the second bracket through a part of the first support pieces, and the second connection part may be movably connected to the second bracket through another part of the first support pieces. In addition, both the first connection part and the second connection part may be disposed close to the light outlet, to dispose the first axis on the mounting side of the mounting oblique surface, thereby improving image stabilization precision.

In a possible implementation, the first axis passes through the first connection part and the second connection part. In this way, a distance between the first axis and the light outlet of the drive motor is short, thereby improving image stabilization precision.

In a possible implementation, the second bracket includes a first part and a second part that are disposed opposite to each other, the first part is located between the first connection part and the base, and the second part is located between the second connection part and the base. The drive motor further includes a second group of support pieces, the second group of support pieces include a plurality of second support pieces, the first part is rotatably connected to the base through a part of the second support pieces, the second part is rotatably connected to the base through another part of the second support pieces, and a central point of the second group of support pieces is located on the mounting side. In this way, when the first optical element is mounted on the drive motor, the central point of the second group of support pieces is located on the mounting side, and the central point of the second group of support pieces is close to an overall center of gravity of the first optical element, the first bracket, and the second bracket. In this way, an anti-interference capability of the drive motor during rotation around the second axis to perform image stabilization can be effectively enhanced. In addition, power consumption of the drive motor can be reduced, thereby helping prolong a battery life of the electronic device, and improve user experience.

In a possible implementation, the first connection part is semi-enclosed by the first part, and the second connection part is semi-enclosed by the second part. In this way, the first connection part and the second connection part may respectively use a size space of the first part in the second direction and a size space of the second part in the second direction, so that an overall structure of the drive motor is more compact. This helps implement miniaturization of the drive motor.

In a possible implementation, the first part includes a first end part, a middle part, and a second end part. The middle part is fastened between the first end part and the second end part, and the second end part is located on a side that is of the first end part and that faces away from the light inlet. The middle part protrudes relative to the first end part and the second end part along a side facing away from the light outlet, a first space is jointly enclosed by the first end part, the middle part, and the second end part, the first connection part is mounted in the first space, and a part of the first support pieces are connected between the first connection part and the middle part. In this way, the first connection part may use the first space enclosed by the first end part, the middle part, and the second end part, so that a structure between the first connection part and the first part is more compact. This helps implement miniaturization of the drive motor.

In a possible implementation, the drive motor may further include a first upper elastic piece and a first lower elastic piece, the first upper elastic piece is connected between the first end part and the first connection part, and the first lower elastic piece is connected between the second end part and the first connection part; and elastic force generated by the first upper elastic piece and the first lower elastic piece keeps a part of the first support pieces in contact with a wall surface of the first space. In this way, the first upper elastic piece and the first lower elastic piece can generate pre-pressure on a first connection piece, so that a part of the first support piece between the first connection part and the first part can maintain contact with the first part and contact with the first connection part. This helps ensure movement stability when the drive motor drives the first optical element to rotate around the first axis.

In a possible implementation, the drive motor further includes a first magnetic piece, a second magnetic piece, and a magnetic attraction sheet. The first magnetic piece and the second magnetic piece are both fastened to the first connection part, and the first magnetic piece is located on a side that is of the second magnetic piece and that is close to the light inlet. The first connection part is provided with a first sliding groove, the first sliding groove is configured to mount a part of the first support pieces, and the first sliding groove is located between the first magnetic piece and the second magnetic piece. The magnetic attraction sheet is fastened to the first part, the magnetic attraction sheet is disposed opposite to the first magnetic piece and the second magnetic piece, and magnetic attraction force generated between each of the first magnetic piece and the second magnetic piece and the magnetic attraction sheet keeps a part of the first support pieces in contact with the first part and the first connection part. In this way, the first magnetic piece may cooperate with the second magnetic piece to generate magnetic attraction force in the second direction on the magnetic attraction sheet in the first part, so that a part of the first support pieces can maintain contact with the first part and contact with the first connection part. This helps ensure movement stability when the drive motor drives the first optical element to rotate around the first axis.

In a possible implementation, a part of the second support pieces are connected between the first end part of the first part and the base, and a part of the second support pieces are connected between the second end part of the first part and the base. In this way, the first part may be movably connected to the base at the first end part and the second end part through a part of second support pieces. This helps reduce movement friction force between the first part and the base. In addition, projections of the second group of support pieces in the second direction basically does not overlap with the first group of support pieces. This improves space utilization inside the drive motor, and helps implement miniaturization of the drive motor.

In a possible implementation, the plurality of first support pieces include a plurality of first balls and a plurality of second balls, the first connection part is rotatably connected to the first part through the plurality of first balls, and the second connection part is rotatably connected to the second part through the plurality of second balls. A circle center of a circle on which a plurality of ball centers of the plurality of first balls are located is a first rotation center, a circle center of a circle on which a plurality of ball centers of the plurality of second balls are located is a second rotation center, and a connection line between the first rotation center and the second rotation center coincides with the first axis. In this way, the first bracket is rotatably connected to the second bracket through the plurality of first balls and the plurality of second balls. This helps reduce movement friction force between the first bracket and the second bracket.

In a possible implementation, the plurality of first support pieces include a first ball and a second ball, the first connection part is rotatably connected to the first part through the first ball, the second connection part is rotatably connected to the second part through the second ball, and a connection line between a ball center of the first ball and a ball center of the second ball coincides with the first axis; or a contact point between the first ball and the first connection part is a first contact point, a contact point between the second ball and the second connection part is a second contact point, and a connection line between the first contact point and the second contact point coincides with the first axis; or a contact point between the first ball and the first part is a first contact point, a contact point between the second ball and the second part is a second contact point, and a connection line between the first contact point and the second contact point coincides with the first axis. In this way, the first bracket is rotatably connected to the second bracket through the first ball and the second ball. This helps reduce movement friction force between the first bracket and the second bracket.

In a possible implementation, the first connection part is provided with the first sliding groove, the first part is provided with a first guide groove, an opening of the first sliding groove and an opening of the first guide groove are provided opposite to each other, the first sliding groove and the first guide groove form a first ball groove, and at least a part of the first ball is located in the first ball groove. The second connection part is provided with a second sliding groove, the second part is provided with a second guide groove, an opening of the second sliding groove and an opening of the second guide groove are provided opposite to each other, the second sliding groove and the second guide groove form a second ball groove, and at least a part of the second ball is located in the second ball groove. At least one of the first sliding groove and the second sliding groove is a V-shaped groove, and one of the first guide groove and the second guide groove is a V-shaped groove. Alternatively, at least one of the first guide groove and the second guide groove is a V-shaped groove, and one of the first sliding groove and the second sliding groove is a V-shaped groove.

It may be understood that the first bracket and the second bracket are respectively provided with two groups of pairwise opposing grooves (namely, the first sliding groove and the first guide groove, and the second sliding groove and the second guide groove). At least one of the first sliding groove and the second sliding groove is set as a V-shaped groove, and one of the first guide groove and the second guide groove is a V-shaped groove. Alternatively, at least one of the first guide groove and the second guide groove is a V-shaped groove, and one of the first sliding groove and the second sliding groove is a V-shaped groove. In this way, when the drive motor determines a position of the first axis, the first bracket can be prevented from being struck during moving relative to the second bracket, and relative positions between an actual first axis and a theoretical first axis can be automatically corrected. This helps improve movement smoothness when the first bracket rotates around the first axis relative to the second bracket.

In a possible implementation, the plurality of second support pieces include at least three third balls, the second bracket is rotatably connected to the base through the plurality of third balls, and a plurality of ball centers of the plurality of third balls are located on a same plane. The second axis is perpendicular to a plane on which the plurality of ball centers of the plurality of third balls are located. In this way, the second axis is perpendicular to the plane on which the plurality of ball centers of the plurality of third balls are located. This helps improve image stabilization precision of the drive motor.

In a possible implementation, the second bracket is provided with a third guide groove, a fourth guide groove, and a fifth guide groove. The base is provided with a first sliding groove, a second sliding groove, and a third sliding groove, an opening of the third guide groove, an opening of the fourth guide groove, and an opening of the fifth guide groove are provided opposite to the opening of the first sliding groove, the opening of the second sliding groove, and an opening of the third sliding groove in a one-to-one correspondence. The third guide groove, the fourth guide groove, and the fifth guide groove respectively form a third ball groove, a fourth ball groove, and a fifth ball groove with the first sliding groove, the second sliding groove, and the third sliding groove. The plurality of third balls are located in the third ball groove, the fourth ball groove, and the fifth ball groove in a one-to-one correspondence. At least two of the third guide groove, the fourth guide groove, and the fifth guide groove are V-shaped grooves, and two of the first sliding groove, the second sliding groove, and the third sliding groove are V-shaped grooves. Alternatively, at least two of the first sliding groove, the second sliding groove, and the third sliding groove are V-shaped grooves, and two of the third guide groove, the fourth guide groove, and the fifth guide groove are V-shaped grooves.

It may be understood that, the second bracket and the base are provided with at least three groups of pairwise opposing grooves (namely, the third guide groove and the first sliding groove, the fourth guide groove and the second sliding groove, and the fifth guide groove and the third sliding groove). At least two of the third guide groove, the fourth guide groove, and the fifth guide groove are disposed as V-shaped grooves, and two of the first sliding groove, the second sliding groove, and the third sliding groove are V-shaped grooves. Alternatively, at least two of the first sliding groove, the second sliding groove, and the third sliding groove are V-shaped grooves, and two of the third guide groove, the fourth guide groove, and the fifth guide groove are V-shaped grooves. In this way, when the drive motor determines a position of the second axis, the second bracket can be prevented from being struck during moving relative to the base, and relative positions between an actual second axis and a theoretical second axis can be further automatically corrected. This helps improve movement smoothness when the second bracket rotates around the second axis relative to the base.

In a possible implementation, the drive motor further includes a first drive coil, a second drive coil, a first group of magnetic pieces, and a second group of magnetic pieces. The first drive coil and the second drive coil are both fastened to the base. The first group of magnetic pieces are fastened to the first bracket and are located on a side that is of the first bracket and that faces away from the light outlet, and the first group of magnetic pieces and the first drive coil are disposed opposite to each other. The second group of magnetic pieces include a first magnetic sub-piece and a second magnetic sub-piece, the first magnetic sub-piece and the second magnetic sub-piece are both fastened to the first bracket, an arrangement direction of the first magnetic sub-piece, the mounting oblique surface, and the second magnetic sub-piece is parallel to the first axis. The second drive coil includes a first sub-coil and a second sub-coil, the first sub-coil and the first magnetic sub-piece are disposed opposite to each other, and the second sub-coil and the second magnetic sub-piece are disposed opposite to each other. In this way, the first group of magnetic pieces and the second group of magnetic pieces are both fastened to the first bracket. This helps implement integrated transmission of the drive motor and improve movement smoothness of the drive motor during image stabilization. In addition, the plurality of groups of coils and magnetic pieces may be respectively located in different directions of the first bracket. This helps improve space utilization inside the drive motor, so that a structure of the drive motor is more compact.

In a possible implementation, the drive motor further includes a first drive coil, a second drive coil, a first group of magnetic pieces, and a second group of magnetic pieces. The first drive coil and the second drive coil are both fastened to the base. The first group of magnetic pieces are fastened to the first bracket and are located on a side that is of the support part and that faces away from the light outlet, and the first group of magnetic pieces and the first drive coil are disposed opposite to each other. The second group of magnetic pieces include a first magnetic sub-piece and a second magnetic sub-piece, the first magnetic sub-piece and the second magnetic sub-piece are both fastened to the second bracket, an arrangement direction of the first magnetic sub-piece, the mounting oblique surface, and the second magnetic sub-piece is parallel to the first axis. The second drive coil includes a first sub-coil and a second sub-coil, the first sub-coil and the first magnetic sub-piece are disposed opposite to each other, and the second sub-coil and the second magnetic sub-piece are disposed opposite to each other. In this way, the first group of magnetic pieces and the second group of magnetic pieces are respectively fastened to the first bracket and the second bracket, so that driving force generated through cooperation between the second group of magnetic pieces and the second drive coil can be directly applied to the second bracket, and is not interfered with by an error such as assembly between the first bracket and the second bracket. This helps improve image stabilization precision of the drive motor.

In a possible implementation, the first drive coil and the first group of magnetic pieces form the first drive mechanism, and the second drive coil and the second group of magnetic pieces form the second drive mechanism. Alternatively, the first drive coil and the first group of magnetic pieces form the second drive mechanism, and the second drive coil and the second group of magnetic pieces form the first drive mechanism. In this way, large driving force can be generated through cooperation between the coil and the magnetic piece. This helps implement that the drive motor carries a first optical element with large mass.

In a possible implementation, the drive motor further includes a magnetic attraction member. The magnetic attraction member is fastened to the base, a projection of the magnetic attraction member in a direction parallel to the second axis at least partially overlaps with the first group of magnetic pieces, and the first bracket squeezes the second bracket under action force between the magnetic attraction member and the first group of magnetic pieces. In this way, the magnetic piece may provide pre-pressure for the first bracket and the second bracket, so that the first group of support pieces can keep in contact with the first bracket and the second bracket, and the second group of support pieces can also keep in contact with the second bracket and the base. This helps ensure movement stability of the drive motor during image stabilization.

In a possible implementation, the first bracket further includes a support part, a first side wall, and a second side wall. The first side wall and the second side wall are disposed opposite to and spaced from each other, an arrangement direction of the first side wall and the second side wall is parallel to the first axis, the support part is connected between the first side wall and the second side wall, a mounting space is enclosed by the support part, the first side wall, and the second side wall, a surface that is of the support part and that faces the mounting space forms the mounting oblique surface of the first bracket, and the mounting space is configured to mount the first optical element. The first connection part is located on a side that is of the first side wall and that faces away from the second side wall, and is fastened to an end part that is of the first side wall and that faces the light outlet, and the second connection part is located on a side that is of the second side wall and that faces away from the first side wall, and is fastened to an end part that is of the second side wall and that is close to the light outlet. In this way, the first bracket can form a semi-enclosed structure, so that the first optical element can be better carried and mounted. In addition, both the first connection part and the second connection part may be disposed close to the light outlet, to dispose the first axis on the mounting side of the mounting oblique surface, thereby improving image stabilization precision.

In a possible implementation, the drive motor further includes a base plate. The base plate includes a main body part and an extension part that are connected to each other. The main body part is fastened to a surface that is of the base and that faces away from the light inlet. The extension part and the first side wall are disposed opposite to each other, and an arrangement direction of the extension part and the first side wall is parallel to the second axis. The extension part is provided with a first protrusion, the first protrusion faces the first side wall, the first side wall is provided with a first limiting groove, and at least a part of the first protrusion is located in the first limiting groove. In this way, when the first bracket rotates around the second axis relative to the base under action of the second bracket, the first protrusion may fit the first limiting groove, to effectively avoid damage caused by collision between the first optical element and the base of the drive motor due to an excessively large rotation angle of the first bracket around the second axis relative to the base. This helps prolong a service life of the camera module.

In a possible implementation, an anti-collision protrusion is disposed on a side that is of the first bracket and that faces away from the light outlet, the base is provided with a limiting hole, and at least a part of the anti-collision protrusion is located in the limiting hole. In this way, when the first bracket rotates around the first axis relative to the base, the anti-collision protrusion may fit the limiting hole to effectively avoid damage caused by collision between the first optical element and the base of the drive motor due to an excessively large rotation angle of the first bracket around the first axis relative to the base. This helps prolong a service life of the camera module.

In a possible implementation, a spacing between the first axis and the mounting oblique surface is greater than 0.01 millimeter; and/or the spacing between the first axis and the mounting oblique surface is greater than or equal to 5 millimeters. In this way, the first axis may be located on the mounting side, and there is a specific distance between the first axis and the mounting oblique surface. This helps reduce a focus shift, thereby effectively reducing impact of the focus shift on a modulation transfer function, helping improve image stabilization precision of the entire camera module, and improving imaging quality.

In a possible implementation, the first bracket and the light inlet are arranged in the first direction, the first bracket and the light outlet are arranged in the second direction, a first connection part and a second connection part are disposed on a side that is of the first bracket and that is close to the light outlet, the first connection part and the second connection part are disposed opposite to and spaced from each other, and an arrangement direction of the first connection part and the second connection part is parallel to the first axis. The drive motor further includes a first group of support pieces, the first group of support pieces include a plurality of first support pieces, the first connection part is rotatably connected to the base through a part of the first support pieces, and the second connection part is rotatably connected to the base through another part of the first support pieces. In this way, the first bracket is directly movably connected to the base. This helps reduce an error caused by assembly or the like between the first bracket and the base, and improve movement precision.

According to a second aspect, an image stabilization assembly is provided. The image stabilization assembly includes a first optical element and the foregoing drive motor. The first optical element includes an optical path folding element. The optical path folding element includes a first surface, a second surface, and a third surface. The first surface is perpendicular to the third surface, the second surface is disposed facing the first surface and the third surface, and is connected to the first surface and the second surface, the first surface and the third surface are both transmission surfaces, the second surface is a reflective surface, the first surface and the light inlet are disposed opposite to each other, and the third surface and the light outlet are disposed opposite to each other. The first optical element has a light incident axis and a light emergent axis, the light incident axis is parallel to the first direction, and the light emergent axis is parallel to the second direction.

It may be understood that, in this implementation, a first axis of the drive motor of the image stabilization assembly is located on a side that is of the mounting oblique surface and that is close to the light outlet, namely, a mounting side of a mounting oblique surface. The first axis is perpendicular to the plane on which the first direction and the second direction are located. In this way, when the drive motor drives the first optical element to rotate around the first axis, the focus shift is small, so that impact of the focus shift on the modulation transfer function can be effectively reduced. This helps improve image stabilization precision of the entire camera module and improve imaging quality.

According to a third aspect, an image stabilization assembly is provided. The image stabilization assembly includes a first optical element and the foregoing drive motor. The first optical element includes an optical path folding element. The optical path folding element includes a reflective surface and a mounting surface. The reflective surface and the mounting surface are disposed opposite to each other, the mounting surface faces the mounting oblique surface of the first bracket, and is fastened to the mounting oblique surface, and the reflective surface is disposed facing away from the mounting oblique surface. The first optical element has a light incident axis and a light emergent axis, the light incident axis is parallel to the first direction, and the light emergent axis is parallel to the second direction.

It may be understood that, in this implementation, a first axis of the drive motor of the image stabilization assembly is located on a side that is of the mounting oblique surface and that is close to the light outlet, namely, a mounting side of a mounting oblique surface. The first axis is perpendicular to the plane on which the first direction and the second direction are located. In this way, when the drive motor drives the first optical element to rotate around the first axis, the focus shift is small, so that impact of the focus shift on the modulation transfer function can be effectively reduced. This helps improve image stabilization precision of the entire camera module and improve imaging quality.

In addition, in a design in which an image stabilization assembly in which the optical path folding element is a reflecting triangular prism whose first surface, second surface, and third surface are all solid surfaces, light transmission between the first surface and the third surface occurs inside the reflecting triangular prism. Due to higher refractive index inside the reflecting triangular prism, a required optical path of the entire camera module increases, a focusing path of a focusing component is long, and an overall size of a module is large. In contrast, in this implementation, the optical path folding element is a reflective plane mirror, with its reflective surface exposed to air. In this way, light transmission between the light inlet and the light outlet occurs entirely in the air. A low refractive index in the air helps reduce an optical path requirement of the camera module. This allows for a shorter focusing path of the focusing component, facilitates reduction of an overall size of the module in the second direction, and enables miniaturization of the camera module.

In a possible implementation, the drive motor further includes an optical mounting piece, at least a part of the optical mounting piece is fastened between the optical path folding element and the mounting oblique surface, and strength of the optical mounting piece is greater than strength of a part in which the mounting oblique surface of the first bracket is located.

It may be understood that, in a design in which the optical path folding element is in direct contact with the mounting oblique surface of the first bracket, and strength of a part of the mounting oblique surface of the first bracket is low, the part of the mounting oblique surface is prone to deformation due to impact or in a high-temperature environment, and consequently, surface shape precision of a contact surface between the optical path folding element and the mounting oblique surface is affected, and optical quality is reduced. In contrast, in this implementation, the optical path folding element is indirectly fastened to the mounting oblique surface through the optical mounting piece, the optical path folding element is not in direct contact with the mounting oblique surface, and strength of the optical mounting piece is high, so that the optical mounting piece is not prone to deformation due to impact or in a high-temperature environment. This helps ensure surface shape precision of a contact surface between the optical path folding element and the optical mounting piece, and ensures optical quality of the optical path folding element.

In a possible implementation, the optical mounting piece includes a first mounting piece and a second mounting piece, the first mounting piece and the second mounting piece are spaced from each other, at least a part of the first mounting piece is fastened between the optical path folding element and the mounting oblique surface, and at least a part of the second mounting piece is fastened between the optical path folding element and the mounting oblique surface.

It may be understood that, in a design in which the optical mounting piece is a single integral piece, in other words, the first mounting piece and the second mounting piece are integrally formed. When the drive motor is impacted, stress of the optical mounting piece is concentrated, and the stress is transmitted inward to the first optical element. As a result, the first optical element is pulled, the surface shape precision of the first optical element is affected, and optical quality is reduced. In contrast, in this implementation, the optical mounting piece is disposed as the first mounting piece and the second mounting piece that are independent of each other and that are separately disposed. In this way, when the drive motor is impacted, the first mounting piece and the second mounting piece may respectively bear stress in different directions, so that pulling of the first optical element due to the stress in different directions can be avoided, surface shape precision of the first optical element is reduced, and optical quality is affected.

In a possible implementation, the first optical element further includes a first lens, the first lens is located on a light incident side of the optical path folding element, and the first lens has positive focal power. In this way, the first lens may have a light converging effect, and the first lens may enable external light to enter the optical path folding element as much as possible, so that an amount of light entering the entire first optical element can be increased. This helps increase an amount of light subsequently entering the focusing component.

In a possible implementation, the first optical element further includes a second lens, the second lens is located on a light emergent side of the optical path folding element, and the second lens has negative focal power. In this way, the second lens has a light diverging function, and the second lens can diverge light emitted by the optical path folding element as much as possible, so that an amount of light emitted by the entire first optical element can be increased. This helps increase an amount of light subsequently entering the focusing component.

In a possible implementation, a projection point of the first axis on the plane on which the first direction and the second direction are located is a first point, and a spacing between the first point and the light emergent axis is less than or equal to 3 millimeters. In this way, a short distance between a first point and the light emergent axis helps improve image stabilization precision of the image stabilization assembly.

In a possible implementation, the drive motor further includes the second bracket and the second drive mechanism. The second bracket is movably connected between the base and the first bracket. The second drive mechanism is configured to drive the second bracket and the first bracket to rotate around the second axis relative to the base. The second axis intersects with the first axis, and the second axis passes through the light outlet and the mounting oblique surface, and is parallel to the second direction. A spacing between the second axis and the light emergent axis is less than or equal to 3 millimeters. In this way, a short distance between the second axis and the light emergent axis helps improve image stabilization precision of the image stabilization assembly.

In a possible implementation, the drive motor further includes the second group of support pieces, and the second bracket is slidably connected to the base through the second group of support pieces. A distance between the central point of the second group of support pieces and an overall center of gravity of the first bracket, the second bracket, and the first optical element is less than or equal to 0.3 millimeter. In this way, the distance between the central point of the second group of support pieces and the overall center of gravity of the first bracket, the second bracket, and the first optical element is short. This can effectively enhance an anti-interference capability of the drive motor during rotation around the second axis to perform image stabilization, further can reduce power consumption of the drive motor, prolong a battery life of the electronic device, and improve user experience.

According to a fourth aspect, a camera module is provided. The camera module includes a focusing component, an image sensor, and the foregoing image stabilization assembly. The focusing component is located on a light emergent side of the image stabilization assembly, and the image sensor is located on a light emergent side of the focusing component. It may be understood that, in this implementation, a first axis of the drive motor of the camera module is located on a side that is of a mounting oblique surface and that is close to a light outlet, namely, a mounting side of the mounting oblique surface. The first axis is perpendicular to the plane on which the first direction and the second direction are located. In this way, when the drive motor drives the first optical element to rotate around the first axis, the focus shift is small, so that impact of the focus shift on the modulation transfer function can be effectively reduced. This helps improve image stabilization precision of the entire camera module and improve imaging quality.

According to a fifth aspect, an electronic device is provided. The electronic device includes a device housing and the foregoing camera module, and the camera module is disposed in the device housing. In this implementation, the camera module of the electronic device has high image stabilization precision and high imaging quality.

### BRIEF DESCRIPTION OF DRAWINGS

To describe the technical solutions in implementations of this application or in the background more clearly, the following briefly describes the accompanying drawings for describing implementations of this application or the background.
FIG. 1 is a diagram of a structure of an implementation of an electronic device according to an implementation of this application;
FIG. 2 is a diagram of a cross-sectional structure of the electronic device shown in FIG. 1 that is cut along A-A according to an implementation;
FIG. 3 is a diagram of a structure of an image stabilization assembly of a camera module shown in FIG. 2 according to some implementations;
FIG. 4 is a diagram of an exploded structure of the image stabilization assembly shown in FIG. 3 according to some implementations;
FIG. 5 is a diagram of an exploded structure of a first optical element of the image stabilization assembly shown in FIG. 3 according to some implementations;
FIG. 6 is a diagram of a partial cross-sectional structure of the image stabilization assembly shown in FIG. 3 that is cut along B1-B1 according to an implementation;
FIG. 7a is a simplified diagram of a first optical element 1b shown in FIG. 6;
FIG. 7b is a schematic view of the structure shown in FIG. 7a from another perspective;
FIG. 7c is a simplified diagram of performing image stabilization by rotating a first optical element of an image stabilization assembly around a first axis according to some implementations;
FIG. 7d is a simplified diagram of performing image stabilization by rotating the first optical element shown in FIG. 7a around a first axis;
FIG. 8 is a simplified diagram of the first optical element shown in FIG. 7a;
FIG. 9a is a simplified diagram of performing image stabilization by rotating a first optical element of an image stabilization assembly around a second axis according to some implementations;
FIG. 9b is a simplified diagram of performing image stabilization by rotating the first optical element shown in FIG. 8 around a second axis;
FIG. 10 is a diagram of a structure of a drive motor of the image stabilization assembly shown in FIG. 3 according to some implementations;
FIG. 11 is a diagram of an exploded structure of the drive motor shown in FIG. 10 according to some implementations;
FIG. 12 is a diagram of an exploded structure of a circuit component of the drive motor shown in FIG. 11 according to some implementations;
FIG. 13 is a diagram of a structure of the circuit component shown in FIG. 12;
FIG. 14 is a diagram of a structure of a base of the drive motor shown in FIG. 11 from another perspective;
FIG. 15 is a diagram of a partial cross-sectional structure of the drive motor shown in FIG. 10 that is cut along C-C according to an implementation;
FIG. 16 is a diagram of an assembled structure of a base, a circuit component, and a magnetic attraction member of the drive motor shown in FIG. 11 from another perspective;
FIG. 17 is a diagram of an assembled structure of a base, a housing, a circuit component, and a magnetic attraction member of the drive motor shown in FIG. 11;
FIG. 18 is a diagram of a structure of the structure shown in FIG. 17 from another perspective;
FIG. 19 is a diagram of a partial cross-sectional structure of the drive motor shown in FIG. 10 that is cut along D-D according to an implementation;
FIG. 20 is a diagram of a structure of a mover of the drive motor shown in FIG. 11 according to a first implementation;
FIG. 21 is a diagram of an exploded structure of the mover shown in FIG. 20;
FIG. 22a is a diagram of a structure of a first bracket of the mover shown in FIG. 21;
FIG. 22b is a diagram of a structure of the first bracket shown in FIG. 22a from another perspective;
FIG. 23 is a diagram of a partial cross-sectional structure of the mover shown in FIG. 20 that is cut along E-E according to an implementation;
FIG. 24 is a diagram of an assembled structure of a first bracket, a first group of magnetic pieces, a second group of magnetic pieces, and a plurality of first support pieces of the mover shown in FIG. 21;
FIG. 25 is a diagram of a structure of the structure shown in FIG. 24 from another perspective;
FIG. 26 is a diagram of a structure of a second bracket of the mover shown in FIG. 21;
FIG. 27 is a diagram of an assembled structure of the second bracket shown in FIG. 26 and a plurality of second support pieces from another perspective;
FIG. 28 is a diagram of a cross-sectional structure of the mover shown in FIG. 20 that is cut along a line F1-F1 according to an implementation;
FIG. 29 is a diagram of a cross-sectional structure of the mover shown in FIG. 20 that is cut along F2-F2 according to an implementation;
FIG. 30 is a diagram of a partial structure of the drive motor shown in FIG. 10 from another perspective;
FIG. 31a is a diagram of a cross-sectional structure of the drive motor shown in FIG. 10 that is cut along D-D according to an implementation;
FIG. 31b is a diagram of a cross-sectional structure of the drive motor shown in FIG. 10 that is cut along C-C according to an implementation;
FIG. 32 is a diagram of a cross-sectional structure of the drive motor shown in FIG. 10 that is cut along G1-G1 according to an implementation;
FIG. 33 is a diagram of a cross-sectional structure of the drive motor shown in FIG. 10 that is cut along G2-G2 according to an implementation;
FIG. 34 is a diagram of a cross-sectional structure of the drive motor shown in FIG. 10 that is cut along H-H according to an implementation;
FIG. 35a is a diagram of a cross-sectional structure of the image stabilization assembly shown in FIG. 3 that is cut along B1-B1 according to an implementation;
FIG. 35b is a diagram of a cross-sectional structure of the image stabilization assembly shown in FIG. 3 that is cut along B2-B2 according to an implementation;
FIG. 36a is a diagram of a cross-sectional structure of the drive motor shown in FIG. 30 according to another implementation;
FIG. 36b is a diagram of a cross-sectional structure of the drive motor shown in FIG. 36a from another perspective;
FIG. 37 is a diagram of a cross-sectional structure of the drive motor shown in FIG. 10 that is cut along D-D according to another implementation;
FIG. 38 is a diagram of a cross-sectional structure of the drive motor shown in FIG. 10 that is cut along C-C according to another implementation;
FIG. 39 is a diagram of a cross-sectional structure of the image stabilization assembly shown in FIG. 3 that is cut along B1-B1 according to another implementation;
FIG. 40 is a diagram of a partial exploded structure of the image stabilization assembly shown in FIG. 39;
FIG. 41 is a diagram of an assembled structure of a first optical element and an optical mounting piece of the image stabilization assembly shown in FIG. 40;
FIG. 42 is a diagram of a cross-sectional structure of an assembled structure of an optical mounting piece of the image stabilization assembly shown in FIG. 40 and a partial structure of a drive motor according to some implementations;
FIG. 43 is a diagram of a structure of the mover shown in FIG. 20 according to a second implementation;
FIG. 44 is a diagram of an exploded structure of the mover shown in FIG. 43;
FIG. 45 is a diagram of a structure of a first bracket of the mover shown in FIG. 44 from another perspective;
FIG. 46 is a diagram of a structure of a second bracket of the mover shown in FIG. 44 from another perspective;
FIG. 47 is a diagram of a cross-sectional structure of the drive motor shown in FIG. 10 that is cut along D-D according to a second implementation;
FIG. 48 is a diagram of a cross-sectional structure of the drive motor shown in FIG. 10 that is cut along C-C according to a second implementation;
FIG. 49 is a diagram of a cross-sectional structure of the mover shown in FIG. 20 that is cut along F1-F1 according to a third implementation;
FIG. 50 is a diagram of a cross-sectional structure of the mover shown in FIG. 20 that is cut along F2-F2 according to a third implementation;
FIG. 51 is a diagram of a structure of the mover shown in FIG. 20 according to a fourth implementation;
FIG. 52 is a diagram of a cross-sectional structure of the mover shown in FIG. 20 that is cut along F2-F2 according to a fourth implementation;
FIG. 53 is a diagram of a structure of the mover shown in FIG. 20 according to a fifth implementation;
FIG. 54 is a diagram of a cross-sectional structure of the mover shown in FIG. 20 that is cut along F1-F1 according to a fifth implementation;
FIG. 55 is a diagram of a cross-sectional structure of the mover shown in FIG. 20 that is cut along F2-F2 according to a fifth implementation; and
FIG. 56 is a diagram of a cross-sectional structure of the mover shown in FIG. 54 according to another implementation.

### DESCRIPTION OF EMBODIMENTS

The following describes implementations of this application with reference to the accompanying drawings in the implementations of this application.

In descriptions of implementations of this application, it should be noted that the terms "mounting" and "connection" should be understood in a broad sense, unless otherwise specified and limited. For example, "connection" may be a detachable connection or a non-detachable connection, or may be a direct connection or an indirect connection through an intermediate medium. "Fastening" means that two parts are connected to each other and a relative position relationship remains unchanged after the two parts are connected to each other. A "rotatable connection" means that two parts are connected to each other and can rotate relative to each other after the two parts are connected to each other. A "slidable connection" means that two parts are connected to each other and can slide relative to each other after the two parts are connected to each other. The orientation terms mentioned in implementations of this application, for example, "up", "down", "left", "right", "inside", and "outside", are merely directions based on the accompanying drawings. Therefore, the orientation terms are used to better and more clearly describe and understand implementations of this application, instead of indicating or implying that a specified apparatus or element should have a specific orientation or be constructed and operated in a specific orientation. Therefore, this cannot be understood as a limitation on implementations of this application. "A plurality of" means at least two.

In implementations of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

In implementations of this application, "and/or" describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

Reference to "an implementation", "some implementations", or the like described in this specification means that one or more implementations of this application include a specific feature, structure, or characteristic described with reference to the implementations. Therefore, statements such as "in an implementation", "in some implementations", "in other implementations", and "in another implementation" that appear at different places in this specification do not necessarily mean referring to a same implementation. Instead, the statements mean "one or more but not all of implementations", unless otherwise specifically emphasized in another manner. The terms "include", "have", and their variants all mean "include but are not limited to", unless otherwise specifically emphasized in another manner.

It may be understood that specific implementations described herein are merely used to explain a related invention, but are not intended to limit the invention. In addition, it should be noted that, for ease of description, only a part related to the invention is shown in the accompanying drawings.

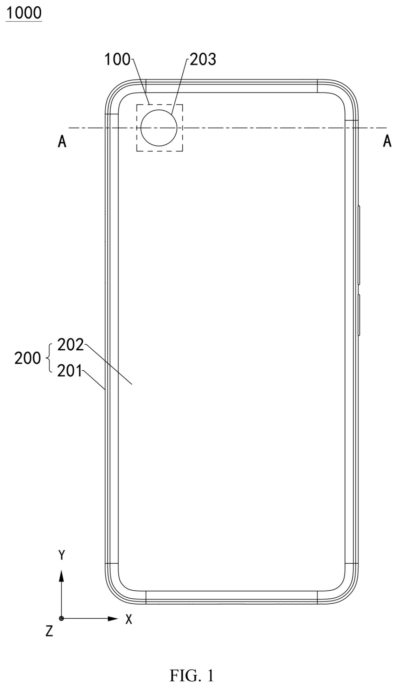

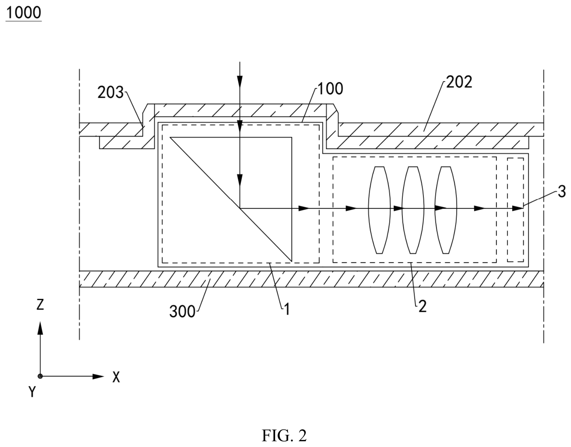

FIG. 1 is a diagram of a structure of an implementation of an electronic device 1000 according to an implementation of this application. FIG. 2 is a diagram of a cross-sectional structure of the electronic device 1000 shown in FIG. 1 that is cut along A-A according to an implementation.

As shown in FIG. 1 and FIG. 2, the electronic device 1000 may be a device having a camera module, for example, a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. Descriptions are provided by using an example in which the electronic device 1000 in the embodiment shown in FIG. 1 is a mobile phone.

As shown in FIG. 1, the electronic device 1000 may include a camera module 100, a device housing 200, and a screen 300. The camera module 100 may be a rear-facing camera module, or may be a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may not include the screen 300.

For ease of description, a width direction of the electronic device 1000 is defined as an X-axis. A length direction of the electronic device 1000 is a Y-axis. A thickness direction of the electronic device 1000 is a Z-axis. It may be understood that a coordinate system of the electronic device 1000 may be flexibly set based on a specific actual requirement.

In this implementation, the device housing 200 may include a frame 201 and a rear cover 202. The rear cover 202 is fastened to the frame 201. For example, the rear cover 202 may be fastened to the frame 201 through an adhesive. The rear cover 202 and the frame 201 may alternatively be of an integrally formed structure, that is, the rear cover 202 and the frame 201 are of an integral structure.

In addition, the screen 300 may be located on a side that is of the frame 201 and that is away from the rear cover 202. In this case, the screen and the rear cover 202 are respectively located on two sides of the frame 201. The inside of the electronic device 1000 is jointly enclosed by the screen 300, the frame 201, and the rear cover 202. A component of the electronic device 1000, for example, a battery, a telephone receiver, or a microphone, may be placed inside the electronic device 1000. The screen 300 may be a flat screen, or may be a curved screen.

For example, the camera module 100 may be a periscope camera module. The camera module 100 may be located inside the electronic device 1000. The camera module 100 may be fastened to a side that is of the screen 300 and that faces the rear cover 202. The rear cover 202 may be provided with a light transmission hole 203. A shape of the light transmission hole 203 is not limited to a circle shown in FIG. 1. Through the light transmission hole 203, the inside of the electronic device 1000 communicates with the outside of the electronic device 1000. Light outside the electronic device 1000 may enter the inside of the electronic device 1000 through the light transmission hole 203. The camera module 100 may collect ambient light that enters the inside of the electronic device 1000.

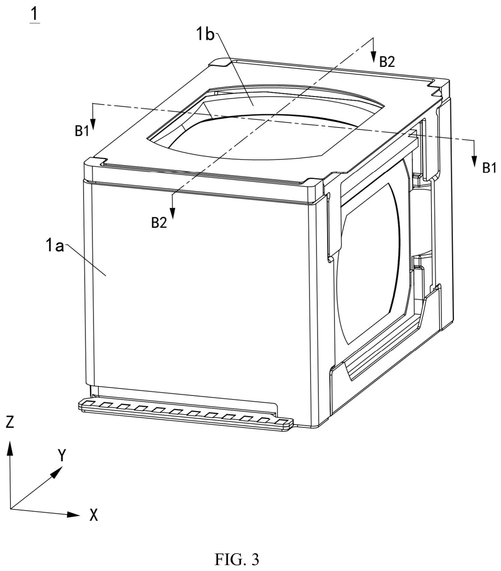

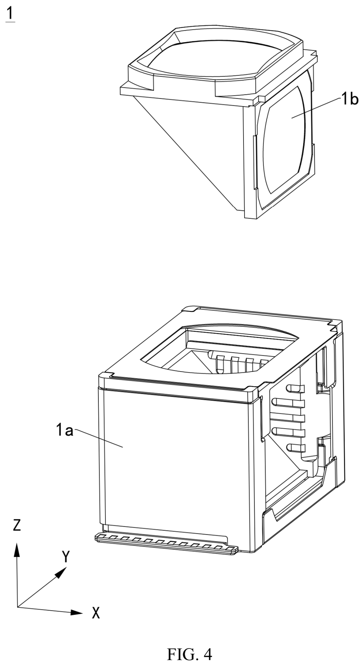

FIG. 3 is a diagram of a structure of an image stabilization assembly of the camera module 100 shown in FIG. 2 according to some implementations. FIG. 4 is a diagram of an exploded structure of the image stabilization assembly shown in FIG. 3 according to some implementations.

As shown in FIG. 2 to FIG. 4, the camera module 100 may include an image stabilization assembly 1, a focusing component 2, and an image sensor 3. Light outside the electronic device 1000 may enter the inside of the electronic device 1000 through the light transmission hole 203, then sequentially pass through the image stabilization assembly 1 and the focusing component 2, and finally be imaged on the image sensor 3. For example, the image stabilization assembly 1, the focusing component 2, and the image sensor 3 may be sequentially arranged in an X-axis direction.

In some implementations, one or more lenses/prisms having a reflection function may be additionally disposed between the focusing component 2 and the image sensor 3, to change a propagation path of light between the focusing component 2 and the image sensor 3, so that after being emitted from the focusing component 2, the light may be reflected once or a plurality of times, and is finally emitted into the image sensor 3. In this way, an overall light path of the camera module 100 is prolonged. This helps increase a zoom ratio of the camera module 100.

For example, the image stabilization assembly 1 may include a drive motor 1a and a first optical element 1b. The first optical element 1b may be mounted on the drive motor 1a. The drive motor 1a may drive the first optical element 1b to rotate around a first axis (not shown in the figure) and/or a second axis (not shown in the figure), to achieve optical image stabilization (optical image stabilization, OIS) of the camera module 100, and improve imaging quality of the camera module 100.

For example, the focusing component 2 may include a focusing motor (not shown in the figure) and a second optical element (not shown in the figure). The second optical element may be mounted on the focusing motor. The focusing motor may control the second optical element to move in an optical-axis direction, to implement auto focus (auto focus, AF). The second optical element may include at least one lens. The first optical element and the second optical element may jointly form an optical system of the camera module 100.

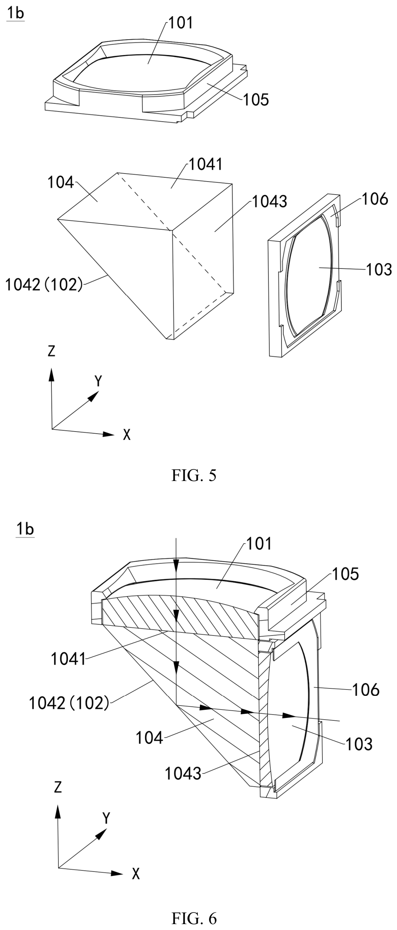

FIG. 5 is a diagram of an exploded structure of the first optical element 1b of the image stabilization assembly 1 shown in FIG. 3 according to some implementations. FIG. 6 is a diagram of a partial cross-sectional structure of the image stabilization assembly 1 shown in FIG. 3 that is cut along B1-B1 according to an implementation.

As shown in FIG. 5 and FIG. 6, the first optical element 1b may include an incident surface 101, a reflective surface 102, and an emergent surface 103. Light may enter the first optical element 1b from the incident surface 101 of the first optical element 1b, and be emitted from the emergent surface 103 after reflecting off the reflective surface 102. A light incident axis T1 of the first optical element 1b may be perpendicular to the incident surface 101. A light emergent axis T2 of the first optical element 1b may be perpendicular to the emergent surface 103. In this implementation, the light incident axis T1 of the first optical element 1b may be parallel to a Z-axis direction, and the light emergent axis T2 may be parallel to the X-axis direction. The first optical element 1b may include an optical path folding element 104 and a first lens 105. The first lens 105 may be fastened to a light incident side of the optical path folding element 104. In this case, an incident surface of the first lens 105 may form the incident surface 101 of the first optical element 1b.

For example, the optical path folding element 104 may be a reflecting triangular prism. A cross section of the optical path folding element 104 may be triangular. The optical path folding element 104 may include a first surface 1041, a second surface 1042, and a third surface 1043. The first surface 1041 and the third surface 1043 may be perpendicular to each other. The second surface 1042 may be connected between the first surface 1041 and the third surface 1043. The first surface 1041 may be perpendicular to the light incident axis. The third surface 1043 may be perpendicular to the light emergent axis. Both the first surface 1041 and the third surface 1043 may be transmission surfaces. The second surface 1042 may be a reflective surface. In this way, light may enter the optical path folding element 104 from the first surface 1041, and be emitted from the third surface 1043 after reflecting off the second surface 1042. In this case, the second surface 1042 of the optical path folding element 104 may form the reflective surface 102 of the first optical element 1b. The third surface 1043 of the optical path folding element 104 may form the emergent surface 103 of the first optical element 1b.

For example, a cross section of the optical path folding element 104 may be in a shape of an isosceles triangle. In other words, an included angle between the second surface 1042 and the first surface 1041 may be 45°, and an included angle between the second surface 1042 and the third surface 1043 may also be 45°. In this case, after the light reflects off the second surface 1042, a deflection angle of the light may be 90° (as shown in FIG. 6). In another implementation, the included angle between the second surface 1042 and the first surface 1041 may alternatively be another angle. This is not specifically limited in this application.

For example, the first lens 105 may be located on the light incident side of the optical path folding element 104. The first lens 105 may be fastened to the first surface 1041 of the optical path folding element 104 through bonding or the like. The first lens 105 may be a lens having positive focal power. In this way, the first lens 105 may have a light converging effect, and the first lens 105 may enable external light to enter the optical path folding element 104 as much as possible, so that an amount of light entering the entire first optical element 1b can be increased. This helps increase an amount of light subsequently entering the focusing component 2.

In some implementations, the first optical element 1b may further include a second lens 106. The second lens 106 may be a lens having negative focal power. The second lens 106 may be located on a light emergent side of the optical path folding element 104. The second lens 106 may be fastened to the third surface 1043 of the optical path folding element 104 through bonding or the like. In this way, the second lens 106 has a light diverging function, and the second lens 106 can diverge light emitted by the optical path folding element 104 as much as possible, so that an amount of light emitted by the entire first optical element 1b can be increased. This helps increase an amount of light subsequently entering the focusing component 2. In this case, an emergent surface of the second lens 106 may form the emergent surface 103 of the first optical element 1b.

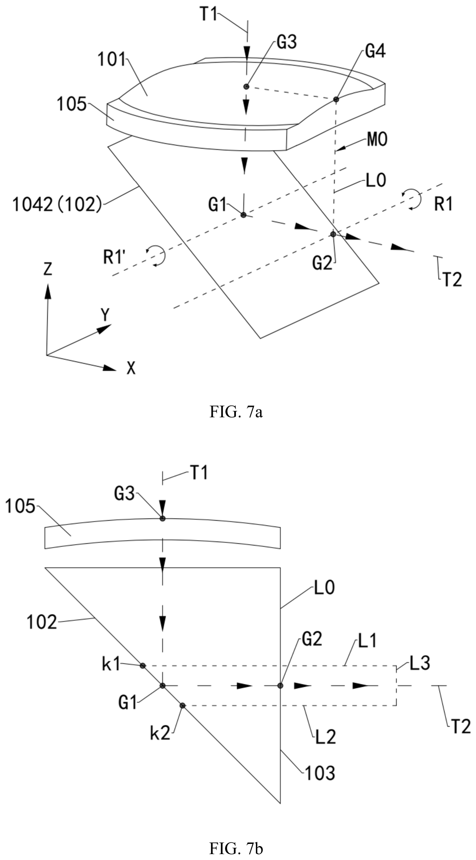

FIG. 7a is a simplified diagram of the first optical element 1b shown in FIG. 6. FIG. 7b is a schematic view of the structure shown in FIG. 7a from another perspective. It should be noted that the first optical element 1b in FIG. 7a shows only the optical path folding element 104 and the first lens 105, and the optical path folding element 104 shows only the second surface 1042 (namely, the reflective surface 102 of the first optical element 1b).

As shown in FIG. 7a and FIG. 7b, the first optical element 1b may rotate around a first axis R1 (that is, perform a nod motion). A plane on which the light incident axis T1 and the light emergent axis T2 are located is a reference plane M0. The first axis R1 may be perpendicular to the light incident axis T1, and may be further perpendicular to the light emergent axis T2. In other words, the first axis R1 may be perpendicular to the reference plane M0. An intersection point of the light emergent axis T2 and the reflective surface 102 is a first intersection point G1. A straight line L0 intersects with an edge line that is of the first lens 105 and that is close to the focusing component 2, and is parallel to the light incident axis T1. The straight line L0 intersects with the light emergent axis T2 at a second intersection point G2. For example, the straight line L0 may coincide with the emergent surface 103. In other words, an intersection point of the light emergent axis T2 and the emergent surface 103 is the second intersection point G2. An intersection point of the light incident axis T1 and the incident surface 101 is a third intersection point G3. An intersection point of the straight line L0 and the incident surface 101 is a fourth intersection point G4. In this case, the first intersection point G1, the second intersection point G2, the third intersection point G3, and the fourth intersection point G4 are all on the reference plane M0. It should be understood that the first axis R1 may be completely perpendicular to the light incident axis T1, or the first axis R1 may be approximately perpendicular to the light incident axis T1, for example, with a deviation less than 1°. The foregoing definition is also applicable to a case in which the first axis R1 is perpendicular to the light emergent axis T2. Details are not described herein again.

For example, a projection point of the first axis R1 on a reference plane M0 is a first point. The first point may be located in an area defined by a straight line L1, a straight line L2, and a straight line L3. Both the straight line L1 and the straight line L2 are parallel to the light emergent axis T2. The straight line L1 is located on a side that is of the light emergent axis T2 and that is close to the first lens 105. The straight line L2 is located on a side that is of the light emergent axis T2 and that faces away from the first lens 105. The straight line L1 intersects with the reflective surface 102 at a point k1. The straight line L2 intersects with the reflective surface at a point k2. Distances from the straight line k1 and the straight line k2 to the light emergent axis T2 are both 3 millimeters. The straight line L3 is parallel to the light incident axis T1. A distance between the straight line L3 and the light incident axis T1 is 20 millimeters.

It should be noted that the area defined by the straight line L1, the straight line L2, and the straight line L3 includes an area enclosed by the straight line L1, the straight line L2, and the straight line L3 and boundaries on which the straight line L1, the straight line L2, and the straight line L3 are located. In other words, the first point may be located on an image side of the reflective surface 102, and a distance between the first point and the light emergent axis T2 may be less than or equal to 3 millimeters. A distance between the first point and the second intersection point G2 in the X-axis direction may be less than or equal to 20 millimeters. In this implementation, the first axis R1 may pass through the second intersection point G2, to be specific, the first axis R1 may be located on the emergent surface 103 of the first optical element 1b.

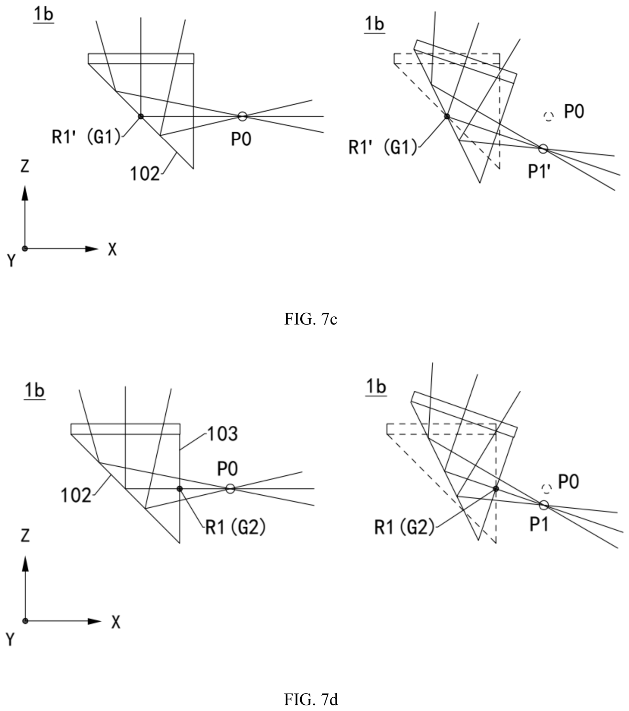

FIG. 7c is a simplified diagram of performing image stabilization by rotating the first optical element 1b of the image stabilization assembly 1 around the first axis R1 according to some implementations. FIG. 7d is a simplified diagram of performing image stabilization by rotating the first optical element 1b shown in FIG. 7a around the first axis R1. It should be noted that diagrams on the left in FIG. 7c and FIG. 7d are both diagrams in which the first optical element 1b vibrates and image stabilization is not enabled, and diagrams on the right are both diagrams in which the first optical element 1b vibrates and image stabilization is enabled.

As shown in FIG. 7a, FIG. 7c, and FIG. 7d, when the electronic device 1000 vibrates in a direction parallel to the reference plane M0 and the drive motor 1a does not enable image stabilization, a focus of the first optical element 1b is a first original focus P0. It should be understood that light emitted by the first optical element 1b generates a plurality of focuses. In other words, the drive motor 1a has a plurality of first original focuses P0 when image stabilization is not enabled. Only one first original focus P0 is shown herein. When the electronic device 1000 vibrates in a direction parallel to the reference plane M0 and the drive motor 1a enables image stabilization, the drive motor 1a may drive the first optical element 1b to rotate around the first axis R1, to compensate for image drift on an image plane caused by the vibration of the electronic device 1000, to implement image stabilization.

It may be understood that, in some implementations, a first axis R1' is located on the reflective surface 102 of the first optical element 1b, or is located on a side that is of the reflective surface 102 and that faces away from the emergent surface 103. However, after the first optical element 1b rotates around the first axis R1' to implement image stabilization, an offset of a first focus P1' generated by the first optical element 1b relative to the first original focus P0 is large. Consequently, a modulation transfer function (Modulation Transfer Function, MTF) of the entire camera module 100 decreases greatly, and imaging quality is affected.

In this implementation, the first axis R1 may be located on a side that is of the reflective surface 102 and that faces the emergent surface 103, that is, located on the image side of the reflective surface 102 (on the right side of the reflective surface 102 in FIG. 7a). In this way, the first axis R1 is located on a side that is of the reflective surface 102 of the first optical element 1b and that faces the emergent surface 103. After the first optical element 1b rotates around the first axis R1 to perform image stabilization, an offset of the first focus P1 generated by the first optical element 1b relative to the first original focus P0 is small. This helps improve image stabilization precision of the camera module 100, and reduce impact of the focus shift on the modulation transfer function, thereby helping improve imaging quality.

In addition, in this implementation, the first axis R1 may pass through the second intersection point G2, to be specific, the first axis R1 may be located on the emergent surface 103 of the first optical element 1b. In this way, a smaller focus shift is generated when the first optical element 1b rotates around the first axis R1. This helps further reduce impact of the focus shift on the modulation transfer function, to further improve imaging quality.

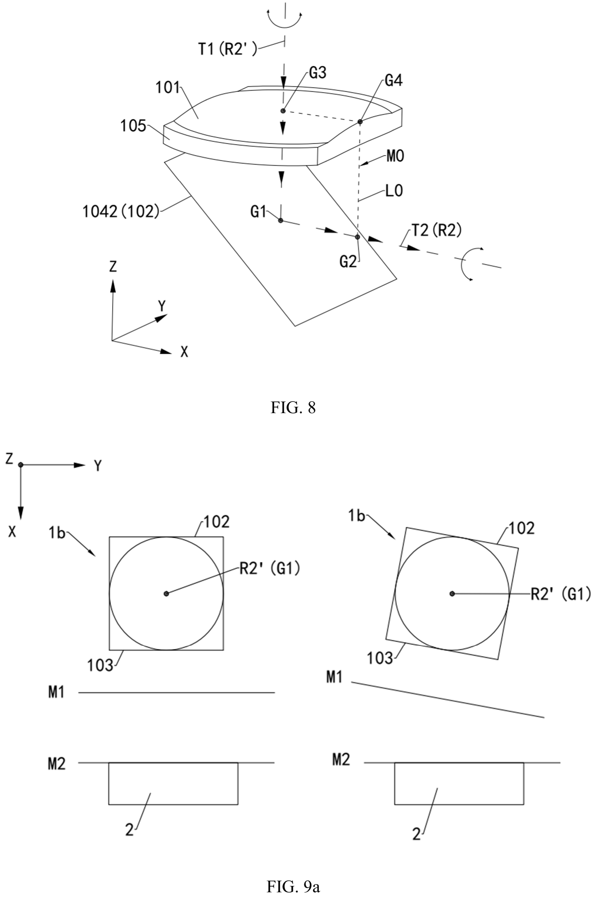

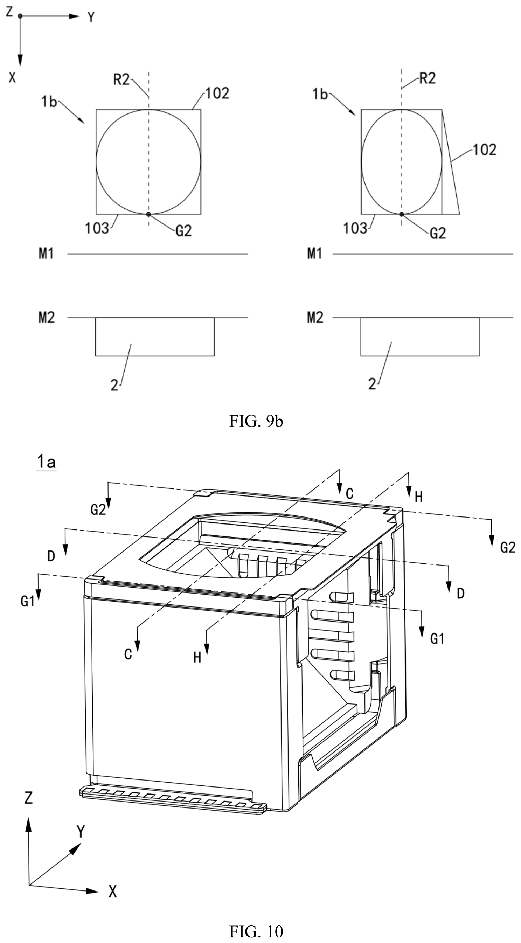

FIG. 8 is a simplified diagram of the first optical element 1b shown in FIG. 7a. FIG. 9a is a simplified diagram of performing image stabilization by rotating the first optical element 1b of the image stabilization assembly 1 around a second axis R2 according to some implementations. FIG. 9b is a simplified diagram of performing image stabilization by rotating the first optical element 1b shown in FIG. 8 around the second axis R2. It should be noted that the first optical element 1b in FIG. 8 shows only the optical path folding element 104 and the first lens 105, and the optical path folding element 104 shows only the second surface 1042 (namely, the reflective surface 102 of the first optical element 1b). Diagrams on the left in FIG. 9a and FIG. 9b are both diagrams in which the first optical element 1b vibrates and image stabilization is not enabled, and diagrams on the right are both diagrams in which the first optical element 1b vibrates and image stabilization is enabled.

As shown in FIG. 8 to FIG. 9b, the first optical element 1b may rotate around the second axis R2 (that is, perform a head shake motion). The second axis R2 may be parallel to the light emergent axis T2, that is, the second axis R2 may be parallel to the X-axis direction. A distance between the second axis R2 and the light emergent axis T2 may be less than or equal to 3 millimeters, to be specific, the second axis R2 may be located in a cylindrical space whose center axis is the light emergent axis T2 and whose radius is 3 millimeters. For example, the second axis R2 may coincide with the light emergent axis T2. It should be understood that the second axis R2 may be completely parallel to the light emergent axis T2, or may be approximately parallel to the light emergent axis T2, for example, with a deviation less than 1°. When the electronic device 1000 vibrates in a direction parallel to the reference plane M0 and the first optical element 1b does not enable image stabilization, the emergent surface M1 of the image stabilization assembly 1 may be parallel to the incident surface M2 of the focusing component 2. The emergent surface M1 of the image stabilization assembly 1 is parallel to the emergent surface 103 of the first optical element 1b. When the drive motor 1a enables image stabilization, the drive motor 1a may drive the first optical element 1b to rotate around the second axis R2, to compensate for image drift on an image plane caused by vibration of the electronic device 1000, to implement image stabilization.

It may be understood that in some implementations, a second axis R2' coincides with the light incident axis G1 of the first optical element 1b, in other words, the second axis R2' may be parallel to the Z-axis direction. However, when the first optical element 1b rotates around the second axis R2', an emergent surface M1' of the image stabilization assembly 1 forms an included angle with the incident surface M2 of the focusing component 2, and therefore, there is a large tilt angle between the first optical element 1b and the focusing component 2. Optical quality of the camera module 100 decreases greatly, imaging quality is low, and a focus shift is large. Consequently, an overall modulation transfer function of the camera module 100 decreases greatly, and imaging quality is affected.

However, in this implementation, the second axis R2 may be parallel to the light emergent axis T2, that is, the second axis R2 may be perpendicular to the emergent surface 103 of the first optical element 1b and the incident surface M2 of the focusing component 2. In this way, when the first optical element 1b rotates around the second axis R2, the emergent surface M1 of the image stabilization assembly 1 may always be parallel to the light emergent axis T2 and perpendicular to the incident surface M2 of the focusing component 2, so that the tilt angle between the first optical element 1b and the focusing component 2 can be effectively reduced, image stabilization precision of the camera module 100 can be improved, an optical quality degradation amount of the camera module 100 is small, and a focus shift is small. This helps reduce impact of the focus shift on the modulation transfer function, so that imaging quality of the camera module 100 is improved.

In addition, the distance between the second axis R2 and the light emergent axis T2 may be less than or equal to 3 millimeters, so that the second axis R2 may be disposed close to the light emergent axis T2. This further reduces impact of the focus shift on the modulation transfer function, and helps improve the imaging quality of the camera module 100.

Refer to FIG. 2, FIG. 7a, and FIG. 8 together. It may be understood that compared with a camera module having a large volume since a reflecting prism is additionally disposed between the focusing component and the image sensor and displacement of the image sensor is controlled to achieve optical image stabilization, the camera module 100 in this implementation is provided with the drive motor 1a to drive the first optical element 1b to rotate around the first axis R1 and/or the second axis R2, to achieve optical image stabilization of the entire camera module 100. Therefore, there is no need to additionally dispose a prism between the focusing component 2 and the image sensor 3, and a volume of the module is small. This helps implement miniaturization of the camera module 100.

Furthermore, in this implementation, the first axis R1 is perpendicular (or parallel to a Y-axis direction in this implementation) to both the light incident axis T1 and the light emergent axis T2, and is located on a side that is of the reflective surface 102 of the first optical element 1b and that is close to the emergent surface 103, namely, the image side of the reflective surface 102. The second axis R2 is parallel to the light emergent axis T2. In this way, regardless of whether the first optical element 1b rotates around the first axis R1 or rotates around the second axis R2, a focus shift is small, and the emergent surface M1 of the image stabilization assembly 1 may always be parallel to the incident surface M2 of the focusing component 2, so that image stabilization precision of the camera module 100 can be effectively improved, impact of the focus shift and the tilt angle on the overall modulation transfer function of the camera module 100 can be reduced, and the imaging quality of the camera module 100 can be improved.

In other words, the camera module 100 in this implementation performs image stabilization by controlling the first optical element 1b to rotate around the first axis R1 and/or the second axis R2. In addition, the first axis R1 is parallel to the Y-axis direction, the second axis R2 is parallel to the X-axis direction, and the first axis R1 is located on a side that is of the reflective surface 102 and that faces the emergent surface 103 (namely, the image side of the reflective surface 102), so that a focus shift of the camera module 100 during optical image stabilization is small, high image stabilization precision can be achieved, the camera module 100 has good imaging quality.

The foregoing describes in detail the structure of the electronic device 1000, the structure of the camera module 100, and the image stabilization principle of the first optical element 1b in the camera module 100. The following describes a structure of the drive motor 1a in the camera module 100 with reference to related accompanying drawings.

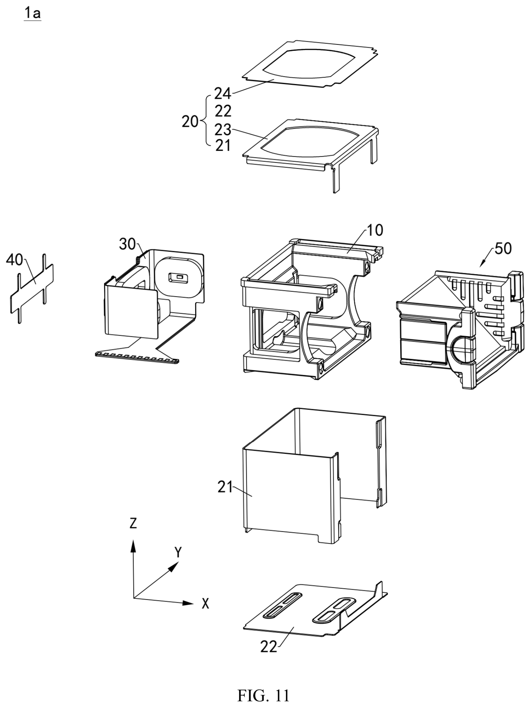

FIG. 10 is a diagram of a structure of the drive motor 1a of the image stabilization assembly 1 shown in FIG. 3 according to some implementations. FIG. 11 is a diagram of an exploded structure of the drive motor 1a shown in FIG. 10 according to some implementations.

As shown in FIG. 10 and FIG. 11, the drive motor 1a may include a base 10, a housing 20, a circuit component 30, a magnetic attraction member 40, and a mover 50. The base 10 and the housing 20 may jointly form a stator of the drive motor 1a. It should be understood that, in this implementation, a width direction of the drive motor 1a is also the width direction of the electronic device 1000, and is an X-axis direction. A length direction of the drive motor 1a, namely, a length direction of the electronic device 1000, is a Y-axis direction. A thickness direction of the drive motor 1a, namely, a thickness direction of the electronic device 1000, is a Z-axis direction. In another implementation, a coordinate system of the drive motor 1a may be flexibly set based on a specific actual requirement.

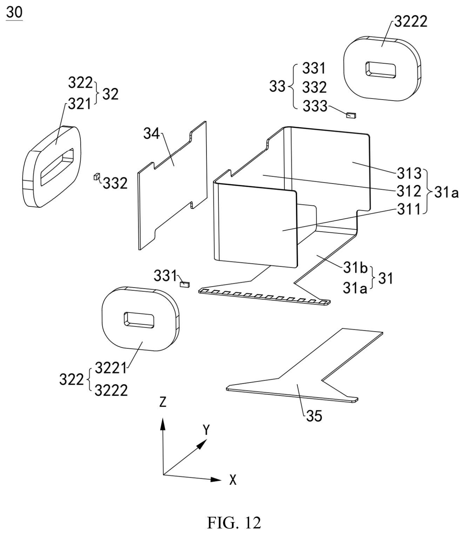

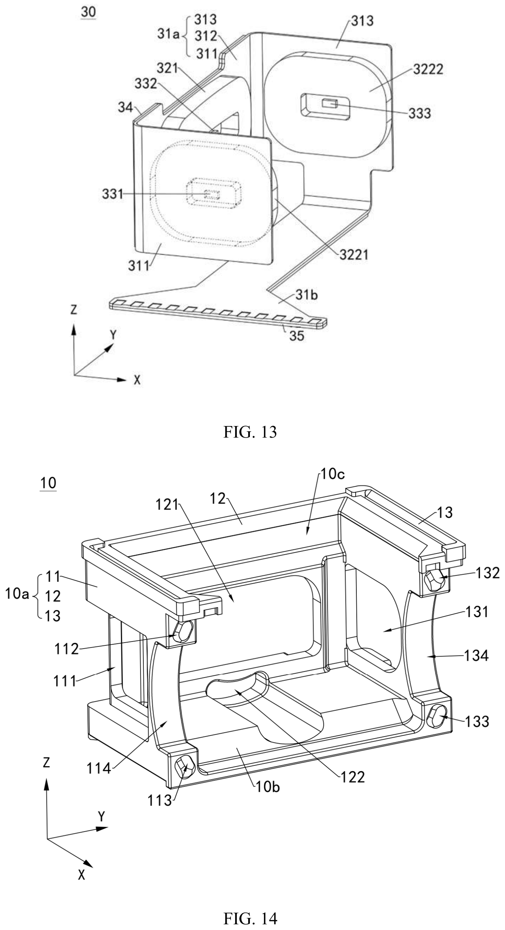

FIG. 12 is a diagram of an exploded structure of the circuit component 30 of the drive motor 1a shown in FIG. 11 according to some implementations. FIG. 13 is a diagram of a structure of the circuit component 30 shown in FIG. 12.

As shown in FIG. 12 and FIG. 13, the circuit component 30 may include a circuit board 31, a coil 32, a position sensor 33, a first reinforcement plate 34, and a second reinforcement plate 35. The coil 32 and the position sensor 33 may be fastened to the circuit board 31 through soldering or the like. The coil 32 and the position sensor 33 may be electrically connected to the circuit board 31. The circuit board 31 may be a flexible circuit board. The position sensor 33 may be a Hall effect sensor. In another implementation, the circuit board 31 may alternatively be a rigid circuit board or a rigid-flexible circuit board. The position sensor 33 may alternatively be a sensor of another type.

For example, the circuit board 31 may include a main board 31a and an extension board 31b. The main board 31a may include a first sub-board 311, a second sub-board 312, and a third sub-board 313. The first sub-board 311 and the third sub-board 313 may be disposed opposite to each other and are spaced from each other. The second sub-board 312 may be fastened between the first sub-board 311 and the third sub-board 313. In this case, the first sub-board 311, the second sub-board 312, and the third sub-board 313 may approximately form a "concave"-shaped structure. The extension board 31b may be fastened to the third sub-board 313, and may be bent relative to the third sub-board 313 in a direction facing the first sub-board 311. It should be understood that, to facilitate description of a specific structure and shape of the circuit board 31, in this implementation, the circuit board 31 is divided into four parts for description, but this does not affect that the circuit board 31 is of an integrally formed structure, in other words, the first sub-board 311, the second sub-board 312, the third sub-board 313, and the extension board 31b may be integrally formed. In another implementation, the first sub-board 311, the second sub-board 312, the third sub-board 313, and the extension board 31b may each be an independent rigid circuit board 31, and may be electrically connected to each other through a conducting member like a conducting wire.

For example, the coil 32 may include a first drive coil 321 and a second drive coil 322. The first drive coil 321 may be fastened to a surface that is of the second sub-board 312 and that faces the first sub-board 311. The second drive coil 322 may include a first sub-coil 3221 and a second sub-coil 3222. The first sub-coil 3221 may be fastened to a surface that is of the first sub-board 311 and that faces the third sub-board 313. The second sub-coil 3222 may be fastened to a surface that is of the third sub-board 313 and that faces the first sub-board 311.

For example, the position sensor 33 may include a first sensor 331, a second sensor 332, and a third sensor 333. The first sensor 331 may be fastened to the second sub-board 312 and is located in a coil hole of the first drive coil 321. The second sensor 332 may be fastened to the first sub-board 311 and is located in a coil hole of the first sub-coil 3221. The third sensor 333 may be fastened to the third sub-board 313 and is located in a coil hole of the second sub-coil 3222.

For example, the first reinforcement plate 34 may be fastened to a surface that is of the second sub-board 312 and that faces away from the first drive coil 321. A shape of the first reinforcement plate 34 may adapt to a shape of the second sub-board 312. The first reinforcement plate 34 may perform structural reinforcement on the second sub-board 312. The second reinforcement plate 35 may be fastened to a surface that is of the extension board 31b and that faces away from the first sub-board 311. A shape of the second reinforcement plate 35 may adapt to a shape of the extension board 31b. The second reinforcement plate 35 may perform structural reinforcement on the extension board 31b. In another implementation, the circuit component 30 may alternatively not include the first reinforcement plate 34 and/or the second reinforcement plate 35.

FIG. 14 is a diagram of a structure of the base 10 of the drive motor 1a shown in FIG. 11 from another perspective.

As shown in FIG. 14, the base 10 may be approximately in a square box shape. The base 10 may include a frame part 10a and a bottom 10b. The frame part 10a may be fastened to an outer edge of the bottom 10b, and an accommodation space 10c is enclosed by the frame part 10a and the bottom 10b. The accommodation space 10c may be configured to accommodate at least a part of the mover 50, at least a part of the coil 32, and the first optical element 1b. For ease of understanding, the frame part 10a and the bottom 10b of the base 10 are schematically divided by using dashed lines in FIG. 14.

For example, the frame part 10a may include a first side part 11, a second side part 12, and a third side part 13. The first side part 11 and the third side part 13 may be disposed opposite to each other and are spaced from each other. The second side part 12 may be fastened between the first side part 11 and the third side part 13. In this case, the frame part 10a may be approximately in a "concave" shape. The first side part 11 may be provided with a first avoidance hole 111. The second side part 12 may be provided with a second avoidance hole 121. The third side part 13 may be provided with a third avoidance hole 131. The first avoidance hole 111, the second avoidance hole 121, and the third avoidance hole 131 may all penetrate an inner peripheral side wall and an outer peripheral side wall of the frame part 10a, and communicate with the accommodation space 10c of the base 10.

For example, the first side part 11 may be provided with a first sliding groove 112 and a second sliding groove 113. The first sliding groove 112 and the second sliding groove 113 may be spaced from each other in the Z-axis direction. An opening of the first sliding groove 112 and an opening of the second sliding groove 113 may be formed on a surface that is of the first side part 11 and that faces away from the second side part 12. A part that is of the first side part 11 and that is located between the first sliding groove 112 and the second sliding groove 113 may be recessed in a direction close to the second side part 12, to form a first avoidance slot 114. A bottom wall of the first avoidance slot 114 may be approximately arc-shaped.

For example, the third side part 13 may be provided with a third sliding groove 132 and a fourth sliding groove 133. The third sliding groove 132 and the fourth sliding groove 133 may be spaced from each other in the Z-axis direction. An opening of the third sliding groove 132 and an opening of the fourth sliding groove 133 may be formed on a surface that is of the third side part 13 and that faces away from the second side part 12. A part that is of the third side part 13 and that is located between the third sliding groove 132 and the fourth sliding groove 133 may be recessed in a direction close to the second side part 12, to form a second avoidance slot 134. A bottom wall of the second avoidance slot 134 may be approximately arc-shaped. A shape of the second avoidance slot 134 may be the same as a shape of the first avoidance slot 114.

For example, at least two of the first sliding groove 112, the second sliding groove 113, the third sliding groove 132, and the fourth sliding groove 133 may be "V"-shaped grooves.

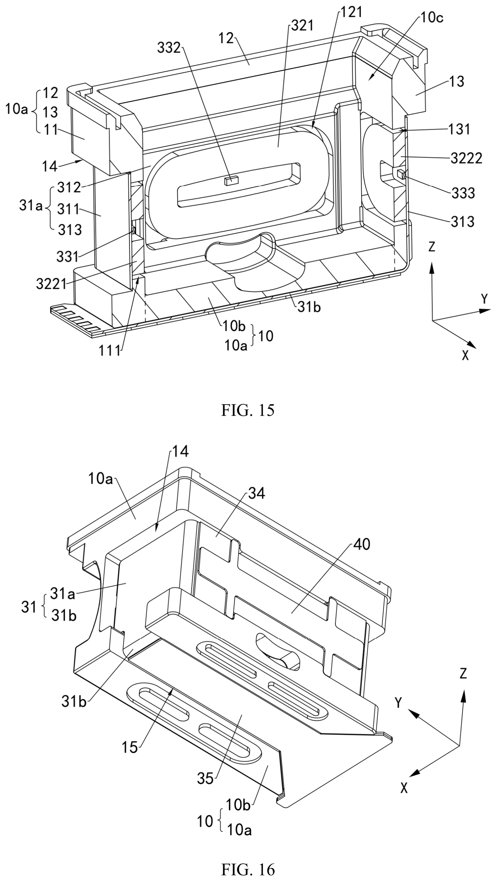

FIG. 15 is a diagram of a partial cross-sectional structure of the drive motor 1a shown in FIG. 10 that is cut along C-C according to an implementation. FIG. 16 is a diagram of an assembled structure of the base 10, the circuit component 30, and the magnetic attraction member 40 of the drive motor 1a shown in FIG. 11 from another perspective. For ease of understanding, the frame part 10a and the bottom 10b of the base 10 are schematically divided by using dashed lines in FIG. 15.

As shown in FIG. 14 to FIG. 16, the main board 31a of the circuit board 31 may be disposed around an outer peripheral side surface of the frame part 10a, and is fastened to the frame part 10a. The first sub-board 311, the second sub-board 312, and the third sub-board 313 may be sequentially fastened to the first side part 11, the second side part 12, and the third side part 13. In this case, at least a part of the first drive coil 321 may be located in the second avoidance hole 121. At least a part of the first sub-coil 3221 may be located in the first avoidance hole 111. At least a part of the second sub-coil 3222 may be located in the third avoidance hole 131. In this way, the main board 31a of the circuit board 31 is fastened to the outer peripheral side surface of the frame part 10a, and the first drive coil 321, the first sub-coil 3221, and the second sub-coil 3222 are respectively placed in the second avoidance hole 121, the first avoidance hole 111, and the third avoidance hole 131, so that a width size and a length size of the frame part 10a can be effectively utilized to place the coil 32, and space utilization inside the drive motor la is improved. This helps implement miniaturization of the drive motor 1a.

For example, the extension board 31b of the circuit board 31 may be fastened to a surface that is of the bottom 10b and that faces away from the accommodation space 10c. A part of the extension board 31b may extend out relative to the base 10. The magnetic attraction member 40 may be fastened to a surface that is of the first reinforcement plate 34 and that faces away from the circuit board 31. The material of the magnetic attraction member 40 may be a magnetic material.

In some implementations, a part of the outer peripheral side surface of the frame part 10a may be recessed in a direction close to the inner peripheral side surface, to form a first groove 14. The first groove 14 may be configured to accommodate the main board 31a of the circuit board 31. A part of the surface that is of the bottom 10b and that faces away from the frame part 10a may further be recessed inward, to form a second groove 15. The second groove 15 may communicate with the first groove 14. The second groove 15 may be configured to accommodate the extension board 31b of the circuit board 31. In this way, the first groove 14 and the second groove 15 configured to accommodate the main board 31a and the extension board 31b are provided on the base 10, so that an overall structure of the circuit board 31 and the base 10 is more compact.

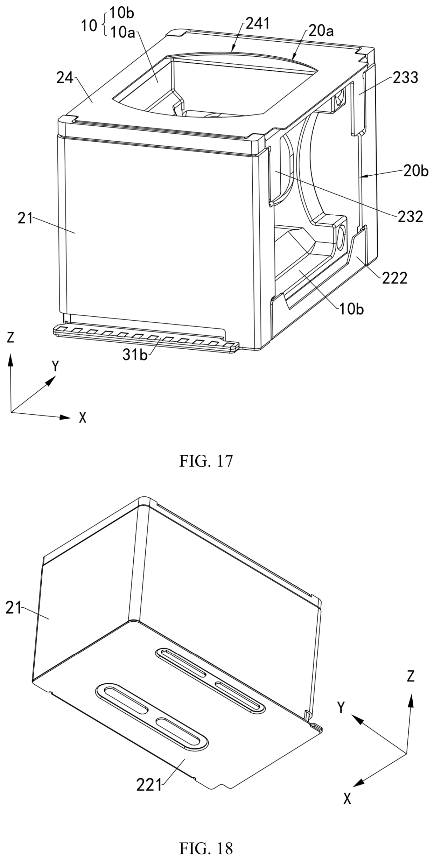

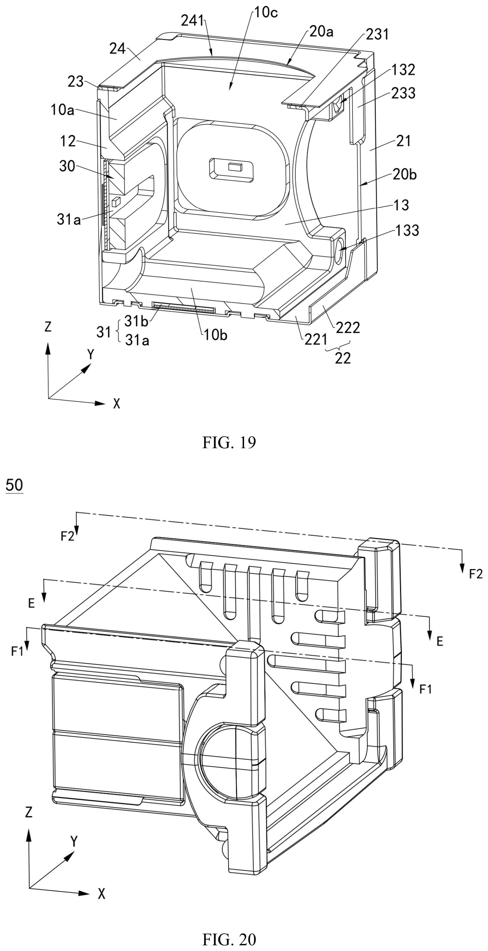

FIG. 17 is a diagram of an assembled structure of the base 10, the housing 20, the circuit component 30, and the magnetic attraction member 40 of the drive motor 1a shown in FIG. 11. FIG. 18 is a diagram of a structure of the structure shown in FIG. 17 from another perspective. FIG. 19 is a diagram of a partial cross-sectional structure of the drive motor 1a shown in FIG. 10 that is cut along D-D according to an implementation.

As shown in FIG. 17 to FIG. 19, the housing 20 may be fastened to the base 10. The housing 20 may be provided with a light inlet 20a and a light outlet 20b. Both the light inlet 20a and the light outlet 20b may communicate with the accommodation space 10c of the base 10 and an external space of the drive motor 1a. A projection of the light inlet 20a in the Z-axis direction may overlap the bottom 10b of the base 10. A projection of the light outlet 20b in the X-axis direction may overlap the second side part 12 of the base 10. Light can be emitted into the drive motor 1a through the light inlet 20a in a first direction, and can be emitted from the drive motor 1a through the light outlet 20b in a second direction. The first direction may intersect with the second direction. For example, the first direction may be perpendicular to the second direction. The first direction may be parallel to the Z-axis direction. The second direction may be parallel to the X-axis direction. The third direction may be perpendicular to a plane on which the first direction and the second direction are located, that is, parallel to the Y-axis direction. In another implementation, the second direction may not be perpendicular to the first direction.

For example, the housing 20 may include an outer housing 21, a base plate 22, and a cover plate 23. The outer housing 21 may be fastened around an outer peripheral side surface of the frame part 10a of the base 10 through bonding or the like. The base plate 22 may include a main body part 221 and an extension part 222 that are connected to each other. The main body part 221 of the base plate 22 may be fastened to a surface that is of the bottom 10b of the base 10 and that faces away from the accommodation space 10c. The extension part 222 may be spaced from the second sliding groove 113 of the first side part 11 of the frame part 10a (refer to FIG. 14), and may be spaced from the fourth sliding groove 133 of the third side part 13. In this case, the housing 20 may wrap at least a part of the circuit component 30 and the base 10. A part of the extension board 31b of the circuit board 31 may be exposed relative to the housing 20, and is configured to electrically connect to an external power supply.

For example, the cover plate 23 may include a main part 231, a first branch part 232, and a second branch part 233. The first branch part 232 and the second branch part 233 may be located on a same side of the main part 231, and are fastened to the main part 231. The first branch part 232 and the second branch part 233 may be spaced from each other. The main part 231 may be fastened to a top surface of the frame part 10a of the base 10. The light inlet 20a may be located in the main part 231. The first branch part 232 and the first sliding groove 112 of the first side part 11 (refer to FIG. 14) may be spaced from each other. The second branch part 233 and the third sliding groove 132 of the third side part 13 may be spaced from each other. In this case, the light outlet 20b of the housing 20 is jointly enclosed by the first branch part 232, the second branch part 233, the extension part 222 of the base plate 22, and the outer housing 21.

In some implementations, the housing 20 may further include a light shielding gasket 24. The light shielding gasket 24 may be fastened to a surface that is of the main part 231 of the cover plate 23 and that faces away from the base 10. The light shielding gasket 24 may be provided with a first through hole 241. The first through hole 241 may communicate with the light inlet 20a.

The foregoing specifically describes a partial structure of the drive motor 1a. The following describes a specific structure of the mover 50 of the drive motor 1a with reference to related accompanying drawings according to a plurality of implementations.

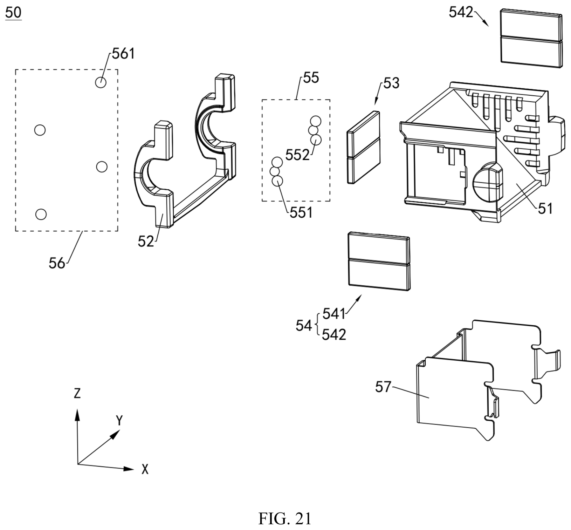

First implementation: FIG. 20 is a diagram of a structure of the mover 50 of the drive motor 1a shown in FIG. 11 according to a first implementation. FIG. 21 is a diagram of an exploded structure of the mover 50 shown in FIG. 20.

As shown in FIG. 20 and FIG. 21, the mover 50 may include a first bracket 51, a second bracket 52, a first group of magnetic pieces 53, a second group of magnetic pieces 54, a first group of support pieces 55, and a second group of support pieces 56. For ease of understanding, the first group of support pieces 55 and the second group of support pieces 56 are respectively framed by using dashed lines in FIG. 21.

The first group of support pieces 55 may include a plurality of first support pieces. The plurality of first support pieces may include one or more first balls 551, and one or more second balls 552. Sizes of the plurality of first balls 551 may not be completely the same. Alternatively, the plurality of second balls 552 may not be completely the same. The second group of support pieces 56 may include a plurality of second support pieces. The plurality of second support pieces may include at least three third balls 561. Sizes of the plurality of third balls 561 may be completely the same. In this implementation, there may be three first balls 551 and three second balls 552. There may be four third balls 561.

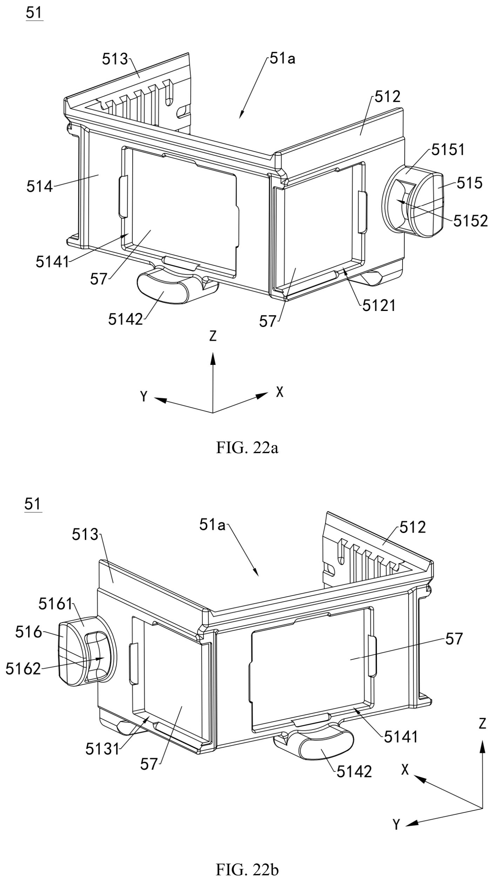

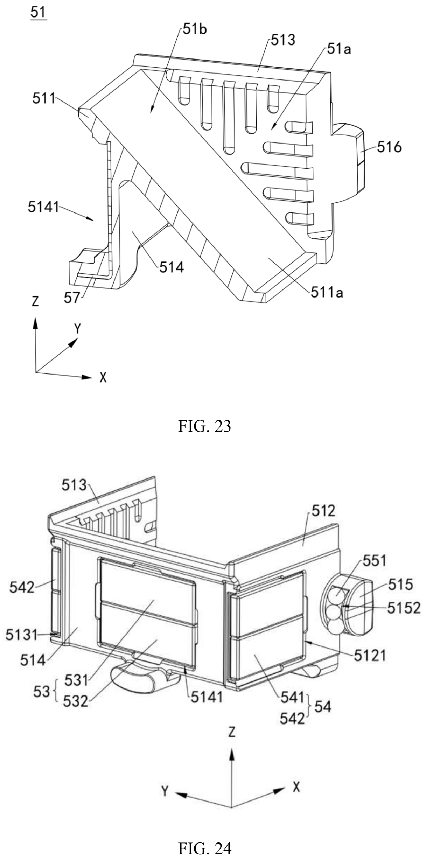

FIG. 22a is a diagram of a structure of the first bracket 51 of the mover 50 shown in FIG. 21. FIG. 22b is a diagram of a structure of the first bracket 51 shown in FIG. 22a from another perspective. FIG. 23 is a diagram of a partial cross-sectional structure of the mover 50 shown in FIG. 20 that is cut along E-E according to an implementation.

As shown in FIG. 22a to FIG. 23, the first bracket 51 may include a support part 511, a first side wall 512, a second side wall 513, a third side wall 514, a first connection part 515, and a second connection part 516. The first side wall 512 and the second side wall 513 may be disposed opposite to and are spaced from each other. The third side wall 514 may be fastened between the first side wall 512 and the second side wall 513. In this case, the first side wall 512, the second side wall 513, and the third side wall 514 may be approximately of a "concave" structure. The support part 511 may be located between the first side wall 512 and the second side wall 513, and is fastened to the top of the first side wall 512, the top of the second side wall 513, and the top of the third side wall 514. A surface that is of the support part 511 and that faces away from the third side wall 514 may form a mounting oblique surface 511a of the support part 511. The mounting oblique surface 511a may be disposed at an included angle with the Z-axis direction. An included angle between the Z-axis direction and a surface that is of the support part 511 and that faces away from the third side wall 514 may be 45°. In this case, a mounting space 51a of the first bracket 51 may be jointly enclosed by the first side wall 512, the second side wall 513, and the support part 511.

For example, the first connection part 515 may be located on a side that is of the first side wall 512 and that faces away from the second side wall 513, and is fastened to an end part that is of the first side wall 512 and that faces away from the third side wall 514. The second connection part 516 may be located on a side that is of the second side wall 513 and that faces away from the first side wall 512, and is fastened to an end part that is of the second side wall 513 and that faces away from the third side wall 514. It should be understood that, in this implementation, the first bracket 51 is divided into six parts for description, but this does not affect that the first bracket 51 is of an integrally formed structure, in other words, the support part 511, the first side wall 512, the third side wall 514, the second side wall 513, the first connection part 515, and the second connection part 516 may be integrally formed. In another implementation, an included angle between a surface that is of the support part 511 and that faces away from the third side wall 514 and the Z-axis direction may alternatively be another degree. This is not specifically limited in this application.

For example, the first side wall 512 may be provided with a first mounting slot 5121. An opening of the first mounting slot 5121 may be formed on a surface that is of the first side wall 512 and that faces away from the second side wall 513. The second side wall 513 may be provided with a second mounting slot 5131, and an opening of the second mounting slot 5131 may be formed on a surface that is of the second side wall 513 and that faces away from the first side wall 512. The third side wall 514 may be provided with a third mounting slot 5141. An opening of the third mounting slot 5141 may be formed on a surface that is of the third side wall 514 and that faces away from the support part 511.

For example, a surface that is of the first connection part 515 and that faces the third side wall 514 is a first surface 5151. The first surface 5151 may be arc-shaped. The first connection part 515 may be provided with a first sliding groove 5152. An opening of the first sliding groove 5152 may be formed on the first surface 5151. The first sliding groove 5152 may be arc-shaped. A surface that is of the second connection part 516 and that faces the third side wall 514 is a second surface 5161. A shape of the second surface 5161 may be the same as a shape of the first surface 5151. The second connection part 516 may be provided with a second sliding groove 5162. An opening of the second sliding groove 5162 may be formed on the second surface. The second sliding groove 5162 may be arc-shaped.

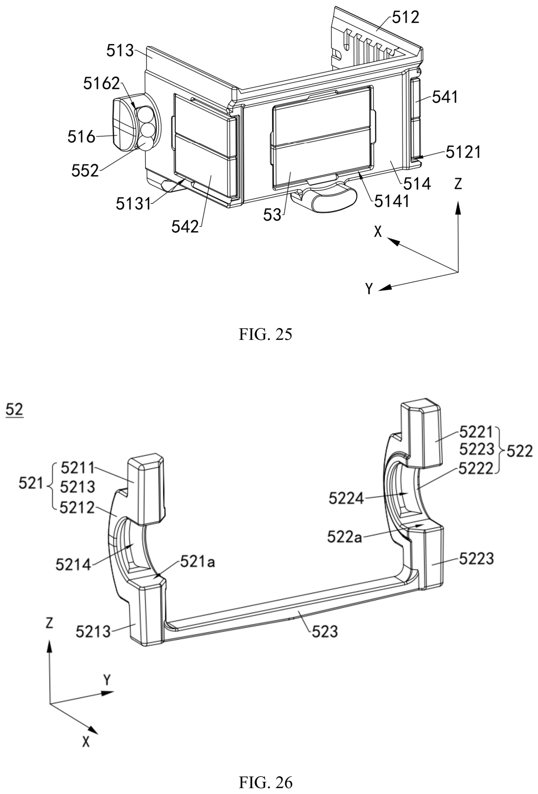

FIG. 24 is a diagram of an assembled structure of the first bracket 51, the first group of magnetic pieces 53, the second group of magnetic pieces 54, and the plurality of first support pieces of the mover 50 shown in FIG. 21. FIG. 25 is a diagram of a structure of the structure shown in FIG. 24 from another perspective.

As shown in FIG. 24 and FIG. 25, the first group of magnetic pieces 53 may be fastened in the third mounting slot 5141 of the third side wall 514. The second group of magnetic pieces 54 may include a first magnetic sub-piece 541 and a second magnetic sub-piece 542. The first magnetic sub-piece 541 may be fastened in the first mounting slot 5121 of the first side wall 512. The second magnetic sub-piece 542 may be fastened in the second mounting slot 5131 of the second side wall 513. A magnetic field direction of the first magnetic sub-piece 541 may be opposite to a magnetic field direction of the second magnetic sub-piece 542. In this case, the first group of magnetic pieces 53 and the mounting oblique surface 511a of the first bracket 51 may be arranged in a second direction (which is also the X-axis direction in this implementation). The first magnetic sub-piece 541, the mounting oblique surface 511a of the first bracket 51, and the second magnetic sub-piece 542 may be sequentially arranged in a third direction (which is also the Y-axis direction in this implementation).

For example, the first group of magnetic pieces 53 may include a first magnetic body 531 and a second magnetic body 532. Both the first magnetic body 531 and the second magnetic body 532 may be magnets with unipolar magnetization. A polarization direction of the first magnetic body 531 may be opposite to a polarization direction of the second magnetic body 532. The polarization direction refers to a direction from an N pole to an S pole in a same magnet. For example, a part that is of the first magnetic body 531 and that faces the first side wall 512 is the S pole, and a part that is of the first magnetic body 531 and that faces away from the first side wall 512 is the N pole. A part that is of the second magnetic body 532 and that faces the first side wall 512 may be the N pole. A part that is of the second magnetic body 532 and that faces away from the first side wall 512 may be the S pole. The first magnetic body 531 and the second magnetic body 532 may be arranged in the Z-axis direction. Structures of the first magnetic sub-piece 541 and the second magnetic sub-piece 542 in the second group of magnetic pieces 54 are approximately the same as the structures of the first group of magnetic pieces 53. The same part is not described again. In some implementations, the first group of magnetic pieces 53 may further include only the first magnetic body 531. The first magnetic body 531 may be a magnet with bipolar magnetization. In other words, the first magnetic body 531 may include two N poles and two S poles. The two N poles and the two S poles may jointly form magnetic fields.

For example, the plurality of first balls 551 in the plurality of first support pieces may be disposed in the first sliding groove 5152 of the first connection part 515. The first sliding groove 5152 may be a "V"-shaped groove, that is, a cross-sectional shape of the first sliding groove 5152 is a "V" shape. In this case, the plurality of first balls 551 and the first sliding groove 5152 may be in tight fit. For example, sizes of first balls 551 that are located at two ends of the first sliding groove 5152 and that are in the plurality of first balls 551 may be slightly greater than sizes of other first balls 551 in the first sliding groove 5152. In this way, the first balls 551 with smaller sizes may increase a span between the first balls 551 located at the two ends of the first sliding groove 5152, and may further prevent the plurality of first balls 551 from being stuck when sliding in the first sliding groove 5152.

For example, the plurality of second balls 552 in the plurality of first support pieces may be disposed in the second sliding groove 5162 of the second connection part 516. The second sliding groove 5162 may be a "U"-shaped groove, that is, a cross-sectional shape of the second sliding groove 5162 is a "U" shape. In this case, the plurality of second balls 552 and the second sliding groove 5162 may be in loose fit. For example, sizes of second balls 552 that are located at two ends of the second sliding groove 5162 and that are in the plurality of second balls 552 may be slightly greater than sizes of other second balls 552 in the first sliding groove 5152.

In some implementations, the mover 50 may further include a first reinforcement piece 57. The first reinforcement piece 57 may be a steel sheet. The first reinforcement piece 57 may be embedded in the first bracket 51 through injection-molding or the like. A part of the first reinforcement piece 57 may be exposed through the first mounting slot 5121, the second mounting slot 5131, and the third mounting slot 5141 (as shown in FIG. 22a and FIG. 22b). In this way, the first reinforcement piece 57 can enhance structural strength of the first bracket 51, thereby helping prolong a service life of the first bracket 51. In some other implementations, the first reinforcement piece 57 may further have magnetic conductivity, to help enhance magnetic field strength of the first group of magnetic pieces 53 and the second group of magnetic pieces 54.

In some implementations, the first sliding groove 5152 may alternatively be a "U"-shaped groove, and the second sliding groove 5162 may alternatively be a "V"-shaped groove. Alternatively, both the first sliding groove 5152 and the second sliding groove 5162 may be "V"-shaped grooves. In other words, at least one of the first sliding groove 5152 and the second sliding groove 5162 is a "V"-shaped groove.

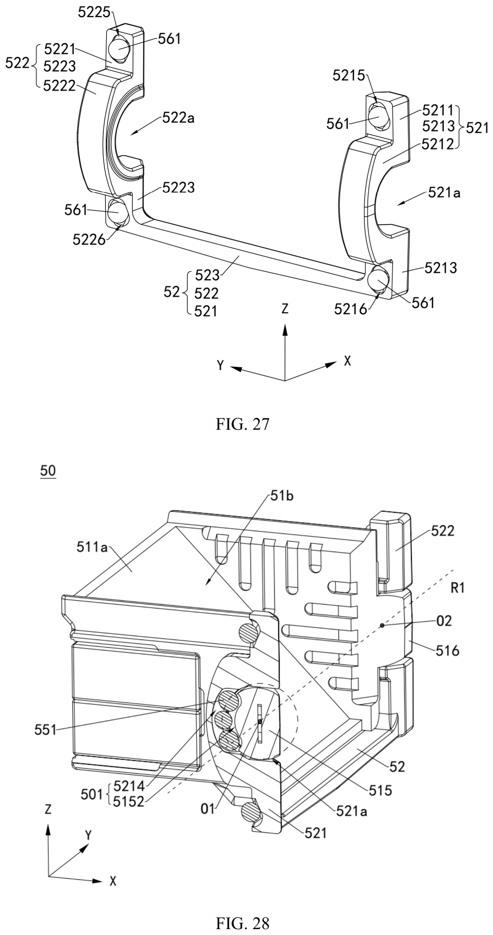

FIG. 26 is a diagram of a structure of the second bracket 52 of the mover 50 shown in FIG. 21. FIG. 27 is a diagram of an assembled structure of the second bracket 52 and the second group of support pieces 56 shown in FIG. 26 from another perspective.

As shown in FIG. 26 and FIG. 27, the second bracket 52 may include a first part 521, a second part 522, and a third part 523. The first part 521 and the second part 522 may be disposed opposite to and are spaced from each other. Shapes of the first part 521 and the second part 522 may be approximately the same. The third part 523 may be fastened between the first part 521 and the second part 522.

For example, the first part 521 may include a first end part 5211, a middle part 5212, and a second end part 5213. The middle part 5212 may be fastened between the first end part 5211 and the second end part 5213. The middle part 5212 may protrude relative to the first end part 5211 and the second end part 5213 along one side. In this case, a first space 521a may be jointly enclosed by the first end part 5211, the middle part 5212, and the second end part 5213.

For example, the middle part 5212 of the first part 521 may be provided with a first guide groove 5214. A projection of an opening of the first guide groove 5214 in the X-axis direction may overlap the first part 521. The opening of the first guide groove 5214 may communicate with the first space 521a. The first guide groove 5214 may be an arc-shaped groove. The first end part 5211 of the first part 521 may be provided with a third guide groove 5215. The second end part 5213 of the first part 521 may be provided with a fourth guide groove 5216. A direction in which an opening of the third guide groove 5215 faces may be the same as a direction in which an opening of the fourth guide groove 5216 faces, and is opposite to a direction in which an opening of the first guide groove 5214 faces.

For example, the second part 522 may include a first end part 5221, a middle part 5222, and a second end part 5223. A structure of the second part 522 is approximately the same as a structure of the first part 521. The same part is not described again. A second space 522a may be jointly enclosed by the first end part 5221, the middle part 5222, and the second end part 5223 of the second part 522. The middle part 5222 of the second part 522 may be provided with a second guide groove 5224. A projection of an opening of the second guide groove 5224 in the X-axis direction may overlap the second part 522. The second guide groove 5224 may communicate with the second space 522a. The second guide groove 5224 may be an arc-shaped groove. The first end part 5221 of the second part 522 may be provided with a fifth guide groove 5225. The second end part 5223 of the second part 522 may be provided with a sixth guide groove 5226. A direction in which an opening of the fifth guide groove 5225 faces may be the same as a direction in which an opening of the sixth guide groove 5226 faces and a direction in which an opening of the third guide groove 5215 faces, and is opposite to a direction in which an opening of the second guide groove 5224 faces.

For example, the first end part 5211 of the first part 521 and the first end part 5221 of the second part 522 may be disposed opposite to each other. The third part 523 may be fastened between the second end part 5213 of the first part 521 and the second end part 5223 of the second part 522. In this case, the second bracket 52 may be approximately in a "concave" shape.

For example, a plurality of second support pieces (which are the plurality of third balls 561 in this implementation) may be disposed in the third guide groove 5215, the fourth guide groove 5216, the fifth guide groove 5225, and the sixth guide groove 5226 in a one-to-one correspondence.

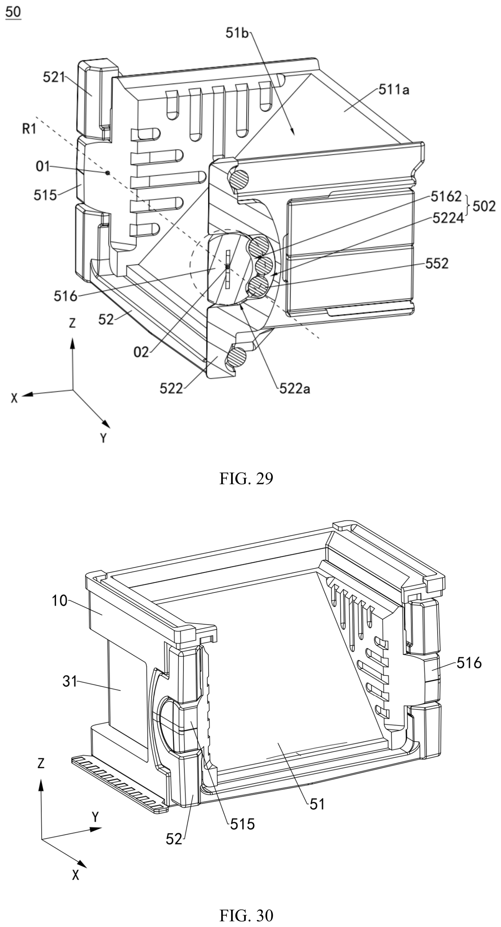

FIG. 28 is a diagram of a cross-sectional structure of the mover 50 shown in FIG. 20 that is cut along a line F1-F1 according to an implementation. FIG. 29 is a diagram of a cross-sectional structure of the mover 50 shown in FIG. 20 that is cut along F2-F2 according to an implementation.

As shown in FIG. 28 and FIG. 29, the first connection part 515 of the first bracket 51 may be mounted in the first space 521a of the first part 521. The first connection part 515 may be rotatably connected to the first part 521 of the second bracket 52 through the plurality of first balls 551, to be specific, the plurality of first balls 551 may be connected between the first connection part 515 and a wall surface of the first space 521a. In this case, the first connection part 515 may be semi-enclosed by the first part 521. In this way, structures of the first part 521 and the first connection part 515 are more compact. This helps implement miniaturization of the drive motor 1a.

For example, an opening of the first sliding groove 5152 of the first connection part 515 and an opening of the first guide groove 5214 of the first part 521 may be provided opposite to each other. The first sliding groove 5152 and the first guide groove 5214 may jointly form a first ball groove 501. The first ball groove 501 may be arc-shaped. In this case, a center of a circle on which ball centers of the plurality of first balls 551 are located is a first rotation center O1. The first connection part 515 of the first bracket 51 may rotate around the first rotation center O1 relative to the first part 521 of the second bracket 52. It should be understood that when sizes of the plurality of first balls 551 are not completely the same (for example, sizes of first balls 551 located at two ends of the first ball groove 501 are greater than sizes of other first balls 551), a center of a circle on which ball centers of the plurality of first balls 551 with greater sizes are located may be used as the first rotation center O1. In some implementations, a center of a circle on which a fitting curve of a groove wall of the first ball groove 501 is located may be used as the first rotation center O1.

For example, the second connection part 516 of the first bracket 51 may be mounted in the second space 522a of the second part 522. The second connection part 516 may be rotatably connected to the second part 522 of the second bracket 52 through the plurality of second balls 552. In this case, the second connection part 516 may be semi-enclosed by the second part 522.

For example, an opening of the second sliding groove 5162 of the second connection part 516 and an opening of the second guide groove 5224 of the second part 522 may be provided opposite to each other. The second sliding groove 5162 and the second guide groove 5224 may jointly form the second ball groove 502. The second ball groove 502 may be arc-shaped. In this case, a center of a circle on which ball centers of the plurality of second balls 552 are located forms a second rotation center O2. The second connection part 516 of the first bracket 51 may rotate around the second rotation center O2 relative to the second part 522 of the second bracket 52.

For example, a straight line on which a connection line between the first rotation center O1 and the second rotation center O2 is located may coincide with the first axis R1. The first axis R1 may be parallel to the Y-axis direction. The first bracket 51 may rotate around the first axis R1 relative to the second bracket 52. For example, the first axis R1 may pass through the first connection part 515 and the second connection part 516. In some implementations, the first axis R1 may not pass through the first connection part 515 and the second connection part 516. The first axis R1 may alternatively be located on a side that is of the first connection part 515 and the second connection part 516 and that faces away the mounting oblique surface 511a.

For example, one of the first guide groove 5214 and the second guide groove 5224 may be a "V"-shaped groove. In this way, one of the first guide groove 5214 and the second guide groove 5224 is a "V"-shaped groove, and relative positions between an actual first rotation center N1 and a theoretical first rotation center N1 can be automatically corrected, therefore, the first bracket 51 can rotate more smoothly relative to the second bracket 52. In addition, it can be also avoided a case in which the first bracket 51 is stuck when rotating relative to the second bracket 52 because both the first guide groove 5214 and the second guide groove 5224 are "V"-shaped grooves. In another implementation, one of the first sliding groove 5152 and the second sliding groove 5162 of the first bracket 51 may be a "V"-shaped groove. At least one of the first guide groove and the second guide groove 5224 of the second bracket 52 is a "V"-shaped groove.

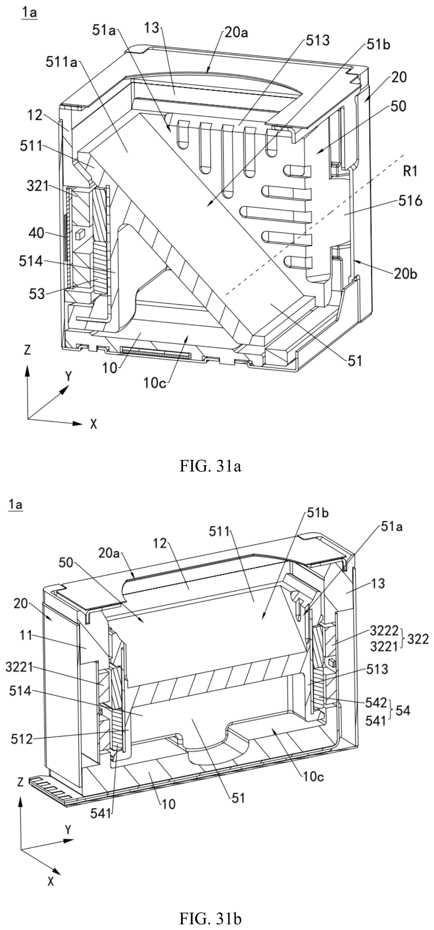

FIG. 30 is a diagram of a partial structure of the drive motor 1a shown in FIG. 10 from another perspective. FIG. 31a is a diagram of a cross-sectional structure of the drive motor 1a shown in FIG. 10 that is cut along D-D according to an implementation. FIG. 31b is a diagram of a cross-sectional structure of the drive motor 1a shown in FIG. 10 that is cut along C-C according to an implementation. Apart of the housing 20 is hidden in the drive motor 1a shown in FIG. 30.

As shown in FIG. 30 to FIG. 31b, the mover 50 may be accommodated inside the housing 20 and mounted on the base 10. The support part 511, the first side wall 512, the third side wall 514, and the second side wall 513 of the first bracket 51 may all be located in the accommodation space 10c of the base 10. The first side wall 512 of the first bracket 51 and the first side part 11 of the base 10 may be disposed opposite to and are spaced from each other. The third side wall 514 of the first bracket 51 and the second side part 12 of the base 10 may be disposed opposite to and are spaced from each other. The second side wall 513 of the first bracket 51 and the third side part 13 of the base 10 may be disposed opposite to and are spaced from each other. In this case, the first drive coil 321 and the first group of magnetic pieces 53 may be disposed opposite to each other. The first sub-coil 3221 of the second drive coil 322 and the first magnetic sub-piece 541 in the second group of magnetic pieces 54 may be disposed opposite to each other. The second sub-coil 3222 of the second drive coil 322 and the second magnetic sub-piece 542 in the second group of magnetic pieces 54 may be disposed opposite to each other. The first bracket 51 and the light inlet 20a may be arranged in a first direction (which is also the Z-axis direction in this implementation). The first bracket 51 and the light outlet 20b may be arranged in a second direction (which is also the X-axis direction in this implementation). In this case, the mounting space 51a of the first bracket 51 may communicate with the light inlet 20a and the light outlet 20b of the housing 20. The mounting oblique surface 511a of the first bracket 51 may face the light inlet 20a and the light outlet 20b. The first axis R1 may be located on a side that is of the mounting oblique surface 511a of the first bracket 51 and that is close to the light outlet 20b of the housing 20, namely, a mounting side 51b of the first bracket 51. The mounting space 51a may be located on the mounting side 51b of the mounting oblique surface 511a.

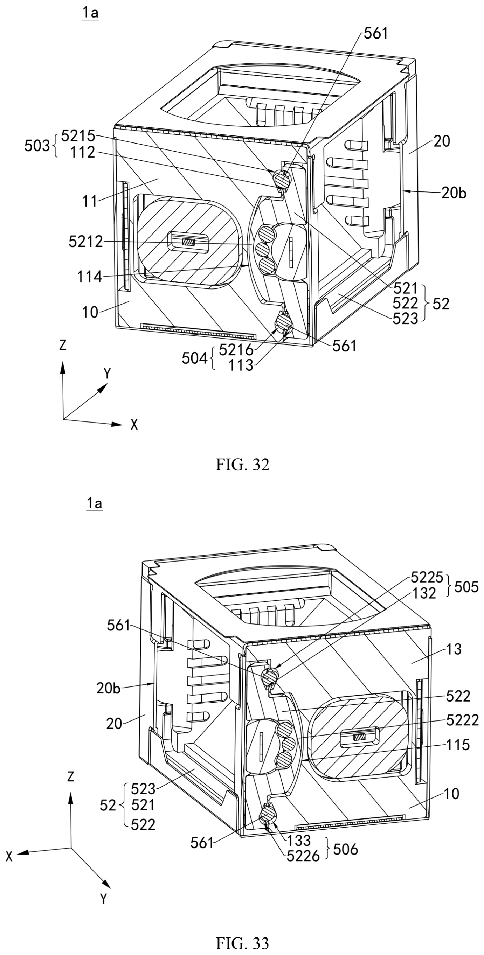

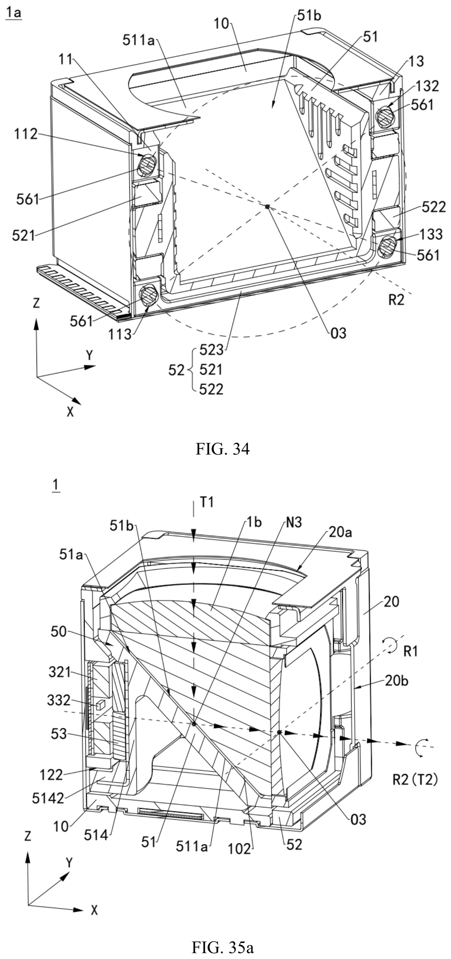

FIG. 32 is a diagram of a cross-sectional structure of the drive motor 1a shown in FIG. 10 that is cut along G1-G1 according to an implementation. FIG. 33 is a diagram of a cross-sectional structure of the drive motor 1a shown in FIG. 10 that is cut along G2-G2 according to an implementation. FIG. 34 is a diagram of a cross-sectional structure of the drive motor 1a shown in FIG. 10 that is cut along H-H according to an implementation.

As shown in FIG. 32 to FIG. 34, the second bracket 52 may be located on a side that is of the base 10 and that is close to the light outlet 20b of the housing 20. The second bracket 52 may be rotatably connected to the base 10 through the plurality of third balls 561. An opening of the third guide groove 5215 of the second bracket 52 and an opening of the first sliding groove 112 of the base 10 may be provided opposite to each other. The third guide groove 5215 and the first sliding groove 112 may jointly form a third ball groove 503. An opening of the fourth guide groove 5216 of the second bracket 52 and an opening of the second sliding groove 113 of the base 10 may be provided opposite to each other. The fourth guide groove 5216 and the second sliding groove 113 may jointly form a fourth ball groove 504. An opening of the fifth guide groove 5225 of the second bracket 52 and an opening of the third sliding groove 132 of the base 10 may be provided opposite to each other. The fifth guide groove 5225 and the third sliding groove 132 may jointly form a fifth ball groove 505. An opening of the sixth guide groove 5226 of the second bracket 52 and an opening of the fourth sliding groove 133 of the base 10 may be provided opposite to each other. The sixth guide groove 5226 and the fourth sliding groove 133 may jointly form a sixth ball groove 506. Four third balls 561 may be located in the third ball groove 503, the fourth ball groove 504, the fifth ball groove 505, and the sixth ball groove 506 in a one-to-one correspondence.

The first part 521 of the second bracket 52 may be rotatably connected to the first side part 11 of the base 10 through a part of the third balls 561. The second part 522 of the second bracket 52 may be rotatably connected to the third side part 13 of the base 10 through another part of the third balls 561. The ball centers of the plurality of third balls 561 may be located on a same plane. A center of a circle on which the ball centers of the plurality of third balls 561 are located is a third rotation center O3, namely, a center of the second group of support pieces 56. The second axis R2 may vertically pass through a plane on which the ball centers of the plurality of third balls 561 are located. The second axis R2 may further pass through the third rotation center O3. In this case, the second bracket 52 may rotate around the second axis R2 relative to the base 10. The third rotation center O3 may be located on a side that is of the mounting oblique surface 511a of the first bracket 51 and that is close to the light outlet 20b, namely, the mounting side 51b of the first bracket 51. The second axis R2 may pass through the mounting oblique surface 511a, and is parallel to a second direction (which is the X-axis direction in this implementation).

For example, two of the third guide groove 5215, the fourth guide groove 5216, the fifth guide groove 5225, and the sixth guide groove 5226 may be "V"-shaped grooves. In this way, two of the third guide groove 5215, the fourth guide groove 5216, the fifth guide groove 5225, and the sixth guide groove 5226 are "V"-shaped grooves, and relative positions between an actual third rotation center O3 and a theoretical third rotation center O3 can be automatically corrected, therefore, the second bracket 52 can rotate more smoothly relative to the base 10. In addition, it can be also avoided a case in which the second bracket 52 is struck while rotating relative to the base 10 because the third guide groove 5215, the fourth guide groove 5216, the fifth guide groove 5225, and the sixth guide groove 5226 are all "V"-shaped grooves or three are "V"-shaped grooves. In another implementation, two of the first sliding groove 112, the second sliding groove 113, the third sliding groove 132, and the fourth sliding groove 133 of the first bracket 51 may be "V"-shaped grooves. At least two of the third guide groove 5215, the fourth guide groove 5216, the fifth guide groove 5225, and the sixth guide groove 5226 of the second bracket 52 are "V"-shaped grooves.

In some implementations, the middle part 5212 of the first part 521 may be located in the first avoidance slot 114 of the first side part 11. The middle part 5222 of the second part 522 may be located in the second avoidance slot 134 of the third side part 13. In this way, the first part 521 of the second bracket 52 may be semi-enclosed by the first side part 11 of the base 10. The second part 522 of the second bracket 52 may be semi-enclosed by the third side part 13 of the base 10. The second bracket 52 may use the length size of the base 10, and the second bracket 52 and the base 10 are disposed more compactly. This helps implement miniaturization of the drive motor 1a.

As shown in FIG. 31a, FIG. 32, and FIG. 33, magnetic attraction force in the X-axis direction may be generated between the magnetic attraction member 40 and the first group of magnetic pieces 53, to provide pre-pressure for the mover 50. In this way, the plurality of first balls 551 and the plurality of second balls 552 all can be in contact with the first bracket 51 and the second bracket 52, and the plurality of third balls 561 all can be in contact with the second bracket 52 and the base 10.

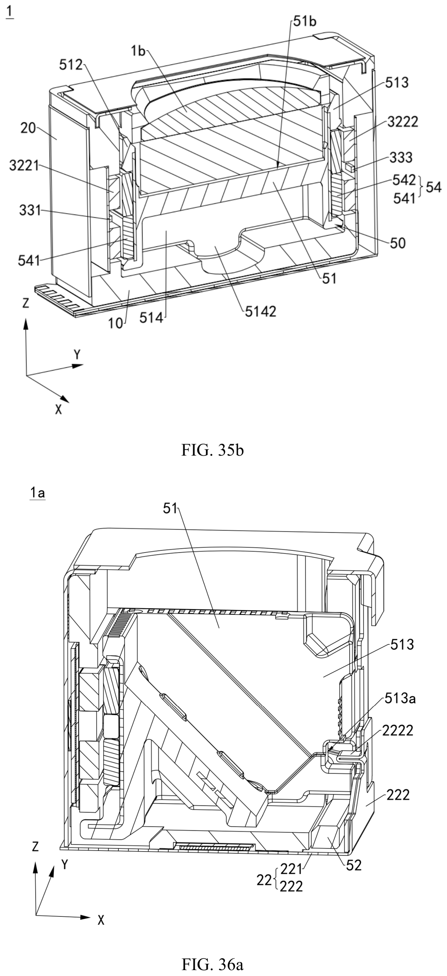

FIG. 35a is a diagram of a cross-sectional structure of the image stabilization assembly 1 shown in FIG. 3 that is cut along B1-B1 according to an implementation. FIG. 35b is a diagram of a cross-sectional structure of the image stabilization assembly 1 shown in FIG. 3 that is cut along B2-B2 according to an implementation.

As shown in FIG. 35a and FIG. 35b, the first optical element 1b may be mounted in the mounting space 51a of the first bracket 51. For example, the first optical element 1b may be fastened to the first side wall 512 and the second side wall 513 of the first bracket 51 through bonding or the like. The reflective surface 102 of the first optical element 1b may face the mounting oblique surface 511a of the first bracket 51. It should be noted that, when the first optical element 1b is mounted on the first bracket 51, and the reflective surface 102 of the first optical element 1b directly faces the mounting oblique surface 511a, the reflective surface of the first optical element 1b may be attached to the mounting oblique surface 511a, or there is a small gap. The small gap may be formed by using an air gap or a thickness of a fastener (for example, an adhesive layer). In this case, a small gap between the reflective surface 102 and the mounting oblique surface 511a may be ignored, and it is considered that the reflective surface 102 coincides with the mounting oblique surface 511a. In other words, the first axis R1 may be located on a side that is of the reflective surface 102 and that is close to the light outlet 20b.

For example, the light incident axis T1 of the first optical element 1b may pass through the light inlet 20a and the mounting oblique surface 511a. The light incident axis T1 may be parallel to a first direction (which is the Z-axis direction in this implementation). The light emergent axis T2 of the first optical element 1b may pass through the mounting oblique surface 511a and the light outlet 20b. The light emergent axis T2 may be parallel to a second direction (which is the X-axis direction in this implementation). The first axis R1 may be perpendicular to a plane on which the light incident axis T1 and the light emergent axis T2 are located. The second axis R2 may coincide with the light emergent axis T2.

For example, a spacing between the first axis R1 and the mounting oblique surface 511a may be greater than 0.01 millimeter. In some implementations, the spacing between the first axis R1 and the mounting oblique surface 511a may be greater than or equal to 5 millimeters.

For example, an overall center of gravity of the mover 50 and the first optical element 1b may be located on a side that is of the mounting oblique surface 511a of the mover 50 and that is close to the light outlet 20b, namely, the mounting side 51b of the first bracket 51. A distance between the third rotation center O3 and the overall center of gravity of the mover 50 and the first optical element 1b may be less than or equal to 0.3 millimeter. It should be noted that the overall center of gravity of the mover 50 and the first optical element 1b may also be approximately considered as an overall center of gravity of the first bracket 51 and the second bracket 52 of the mover 50, and the first optical element 1b.

For example, the first axis R1 may intersect with the second axis R2. In some implementations, the first axis R1 and the second axis R2 may both pass through the third rotation center O3 and coincide with each other. In some other implementations, the first axis R1 may not intersect with the second axis R2. This is not limited in this application.

When a signal is applied to the first drive coil 321, the first group of magnetic pieces 53 may cooperate with the first drive coil 321 to generate driving force in the Z-axis direction, so that the first bracket 51 may be driven to rotate around the first axis R1 relative to the second bracket 52, that is, the first bracket 51 rotates around the first axis R1 relative to the stator. In this case, the first group of magnetic pieces 53 and the first drive coil 321 may jointly form a first drive mechanism of the drive motor 1a. The second sensor 332 may cooperate with the first group of magnetic pieces 53 to detect magnetic field strength of the first group of magnetic pieces 53 at different rotation angles of the first bracket 51 around the first axis R1, to detect the rotation angle of the first bracket 51 around the first axis R1. In other words, the first optical element 1b may rotate around the first axis R1 relative to the stator under action of the mover 50, to implement image stabilization.

When a signal is applied to the second drive coil 322, the first magnetic sub-piece 541 in the second group of magnetic pieces 54 may cooperate with the first sub-coil 3221 of the second drive coil 322 to generate first driving force in the Z-axis direction. The second magnetic sub-piece 542 in the second group of magnetic pieces 54 may cooperate with the second sub-coil 3222 of the second drive coil 322 to generate second driving force in the Z-axis direction. A direction of the first driving force is opposite to a direction of the second driving force, so that the first bracket 51 can be driven to drive the second bracket 52 to rotate around the second axis R2 relative to the base 10. In other words, the first bracket 51 can drive the second bracket 52 to rotate around the second axis R2 relative to the stator. In this case, the second group of magnetic pieces 54 and the second drive coil 322 may jointly form a second drive mechanism of the drive motor 1a. The first sensor 331 may cooperate with the first magnetic sub-piece 541, and the third sensor 333 may cooperate with the second magnetic sub-piece 542 to jointly detect magnetic field strength when the first bracket 51 rotates around the second axis R2 at different angles, so as to detect a rotation angle of the first bracket 51 around the second axis R2. In other words, the first optical element 1b may rotate around the second axis R2 relative to the stator under action of the mover 50, to implement image stabilization.

It may be understood that, in some designs in which a mover of a drive motor drives the first optical element to rotate around the first axis relative to a stator and rotate around the second axis to achieve optical image stabilization, a focus shift is relatively large when the drive motor drives the first optical element to rotate around the first axis and/or the second axis for optical image stabilization, leading to a significant decrease in a modulation transfer function of the entire camera module, low image stabilization precision, and degraded imaging quality, where the first axis is parallel to the Y-axis direction, the first axis is located on the mounting oblique surface of the mover or on a side that is of the mounting oblique surface and that faces away from the light outlet, and the second axis is parallel to the Z-axis direction. In contrast, in this implementation, the first axis R1 of the drive motor 1a is located on a side that is of the mounting oblique surface 511a and that is close to the light outlet 20b, namely, the mounting side 51b of the mounting oblique surface 511a, and the first axis R1 is parallel to the Y-axis direction. In this way, when the mover 50 of the drive motor 1a drives the first optical element 1b to rotate around the first axis R1, the focus shift is small, so that impact of the focus shift on the modulation transfer function can be effectively reduced. This helps improve image stabilization precision of the entire camera module 100 and improve imaging quality. In addition, the mover 50 drives the first optical element 1b to rotate relative to the stator around the second axis R2, and the second axis R2 is parallel to the X-axis direction. In this way, when the mover 50 of the drive motor 1a drives the first optical element 1b to rotate around the second axis R2, the emergent surface of the image stabilization assembly 1 can be always perpendicular to the light emergent axis T2, so that a tilt angle between the image stabilization assembly 1 and the focusing component 2 can be effectively reduced, and the focus shift is reduced. This helps improve image stabilization precision of the entire camera module 100, so that optical quality of the camera module 100 is high, and imaging quality is improved.

In other words, according to the drive motor 1a in this implementation, the first axis R1 is disposed to be parallel to the Y-axis direction, the second axis R2 is disposed to be parallel to the X-axis direction, and the first axis R1 is located on the mounting side 51b of the mounting oblique surface 511a of the mover 50, so that overall image stabilization precision of the drive motor 1a can be effectively improved, and impact on the modulation transfer function can be reduced. This helps improve imaging quality of the camera module 100.

Furthermore, in this implementation, when the mover 50 of the drive motor 1a drives the stator to rotate around the second axis R2, the third rotation center O3 is located on the mounting side 51b of the mounting oblique surface 511a of the mover 50, so that the third rotation center O3 may be closer to the overall center of gravity of the mover 50 and the first optical element 1b. In this way, an anti-interference capability of the drive motor 1a during rotation around the second axis R2 for image stabilization can be effectively enhanced. In addition, power consumption of the drive motor 1a can be reduced, thereby helping prolong a battery life of the electronic device 1000, and improve user experience. A distance between the third rotation center O3 and the overall center of gravity of the mover 50 and the first optical element 1b may be less than or equal to 0.03 millimeter.

In addition, compared with a drive motor in which a first axis is parallel to the Y-axis direction, or a first axis is located on a mounting oblique surface of a mover or is located on a side that is of a mounting oblique surface and that faces away from a light outlet, the drive motor 1a in this implementation in which the first axis R1 is located on the mounting side 51b of the mounting oblique surface 511a can increase a distance between the first group of magnetic pieces 53 and the first shaft R1, in other words, a driving force arm when the first group of magnetic pieces 53 drive the first bracket 51 to rotate around the first axis R1 relative to the second bracket 52 is increased. In this way, under a condition that total weight of the mover 50 and the first optical element 1b is the same, the drive motor 1a in this implementation can generate greater thrust for image stabilization, to implement large-angle image stabilization. Under a condition that image stabilization angles are the same, the mover 50 of the drive motor 1a in this implementation can carry a first optical element 1b with a greater weight. This helps improve optical quality of the entire camera module 100.

In addition, in this implementation, the plurality of groups of magnetic pieces (which are the first group of magnetic pieces 53 and the second group of magnetic pieces 54 in this implementation) of the drive motor 1a are all disposed on the first bracket 51, so that integrated transmission can be achieved. This helps improve actuation smoothness of the drive motor 1a during image stabilization.

In some implementations, an anti-collision protrusion 5142 may be disposed at an end part that is of the third side wall 514 of the first bracket 51 and that faces away from the light inlet 20a (FIG. 22a and FIG. 22b also show the anti-collision protrusion 5142 from another perspective). A limiting hole 122 may be provided on the second side part 12 of the base 10 (FIG. 14 also shows the limiting hole 122 from another perspective). At least a part of the anti-collision protrusion 5142 of the first bracket 51 may be located in the limiting hole 122 of the base 10. In this way, when the first bracket 51 rotates around the first axis R1 relative to the base 10, the anti-collision protrusion 5142 may fit the limiting hole 122 to effectively avoid damage caused by collision between the first optical element 1b and the stator of the drive motor 1a due to an excessively large rotation angle of the first bracket 51 around the first axis R1 relative to the base 10. This helps prolong a service life of the camera module 100.

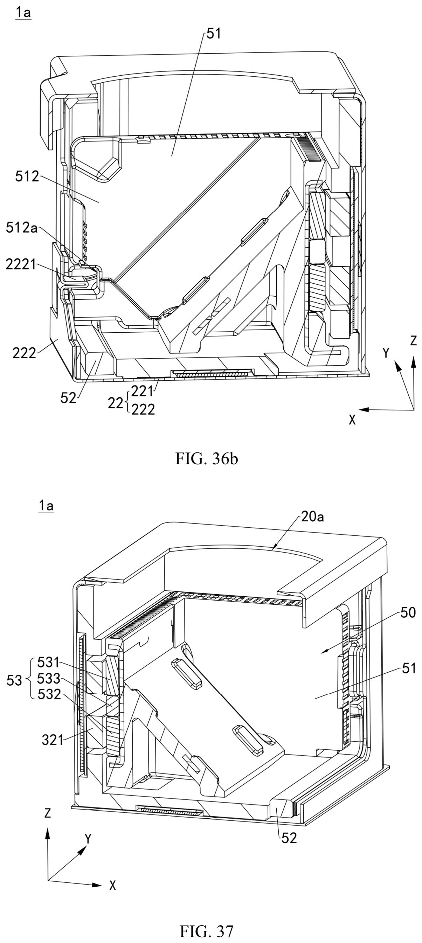

In another implementation, as shown in FIG. 36a and FIG. 36b, the extension part 222 of the base plate 22 may be provided with a first protrusion 2221 and a second protrusion 2222. The first protrusion 2221 may be disposed facing the first side wall 512 of the first bracket 51. The second protrusion 2222 may be disposed facing the second side wall 513 of the first bracket 51. The first side wall 512 of the first bracket 51 may be provided with a first limiting groove 512a. At least a part of the first protrusion 2221 may be located in the first limiting groove 512a. The second side wall 513 of the first bracket 51 may be provided with a second limiting groove 513a. At least a part of the second protrusion 2222 may be located in the second limiting groove 513a. In this way, when the first bracket 51 rotates around the second axis R2 relative to the stator under the action of the second bracket 52 (refer to FIG. 35a), the first protrusion 2221 may cooperate with the first limiting groove 512a, and the second protrusion 2222 may cooperate with the second limiting groove 513a to effectively avoid damage caused by collision between the first optical element 1b and the stator of the drive motor 1a due to an excessively large rotation angle of the first bracket 51 around the second axis R2 relative to the stator. This helps prolong a service life of the camera module 100.

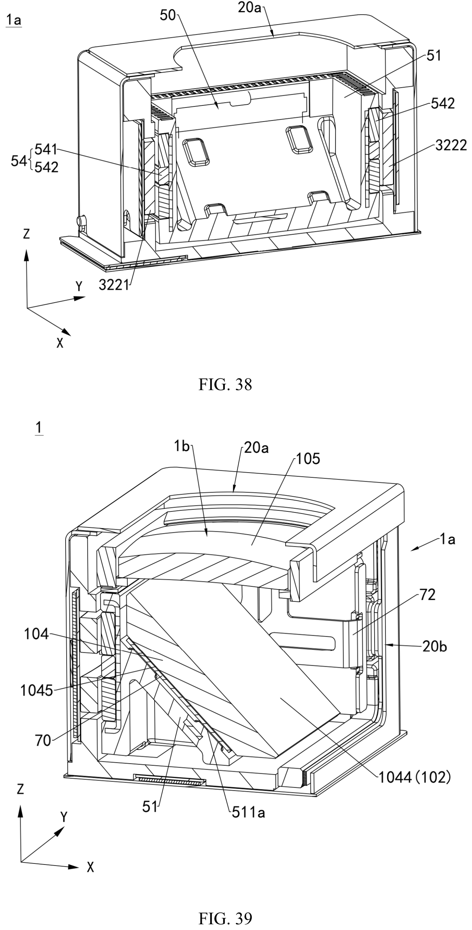

FIG. 37 is a diagram of a cross-sectional structure of the drive motor 1a shown in FIG. 10 that is cut along D-D according to another implementation. FIG. 38 is a diagram of a cross-sectional structure of the drive motor 1a shown in FIG. 10 that is cut along C-C according to another implementation.

As shown in FIG. 37 and FIG. 38, a structure of the drive motor 1a in this implementation is approximately the same as the structure of the drive motor 1a shown in FIG. 10. The same part is not described again. A difference lies in that the first group of magnetic pieces 53 of the drive motor 1a in this implementation may further include a third magnetic body 533. The third magnetic body 533 may be located between the first magnetic body 531 and the second magnetic body 532. The first magnetic body 531, the third magnetic body 533, and the second magnetic body 532 may be sequentially arranged in the Z-axis direction. The third magnetic body 533 may be a magnet with unipolar magnetization. A polarization direction of the third magnetic body 533 may be perpendicular to a polarization direction of the first magnetic body 531. For example, a part that is of the first magnetic body 531 and that faces the first side wall 512 is the S pole, and a part that is of the first magnetic body 531 and that faces away from the first side wall 512 is the N pole. A part that is of the second magnetic body 532 and that faces the first side wall 512 may be an S pole. A part that is of the second magnetic body 532 and that faces away from the first side wall 512 may be an N pole. Apart that is of the third magnetic body 533 and that faces the first magnetic body 531 may be an N pole. Apart that is of the third magnetic body 533 and that faces the second magnetic body 532 may be an S pole. In this case, a plurality of magnetic bodies (namely, the first magnetic body 531, the second magnetic body 532, and the third magnetic body 533 in this implementation) of the first group of magnetic pieces 53 may form a Halbach array.

It may be understood that, in this implementation, the first group of magnetic pieces 53 is provided with a plurality of magnetic bodies by using the Halbach array. When overall sizes of the first group of magnetic pieces 53 are the same, the first group of magnetic pieces 53 disposed by using the Halbach array in this implementation generate greater driving force with the first drive coil 321. In this way, under a condition that total weight of the mover 50 and the first optical element 1b is the same, the mover 50 in this implementation can drive the first optical element 1b to rotate around the first axis R1 (refer to FIG. 35a) by a greater angle, to implement large-angle image stabilization. Under a condition that rotation angles are the same, the mover 50 in this implementation can carry a first optical element 1b with a greater weight. This helps improve optical quality of the entire camera module 100.

In some implementations, a plurality of magnetic bodies may also be disposed in the first magnetic sub-piece 541 and the second magnetic sub-piece 542 in the second group of magnetic pieces 54 by using the Halbach array. A magnetic field direction of the first magnetic sub-piece 541 may be opposite to a magnetic field direction of the second magnetic sub-piece 542. Structures of the first magnetic sub-piece 541 and the second magnetic sub-piece 542 are approximately the same as the structures of the first group of magnetic pieces 53. The same part is not described again.

In some implementations, the first group of magnetic pieces 53 may further cooperate with the first drive coil 321 to generate driving force parallel to the Y-axis direction, to drive the first bracket 51 and the second bracket 52 to rotate around the second axis R2 relative to the base 10. In this case, the first group of magnetic pieces 53 and the first drive coil 321 may jointly form a second drive mechanism of the drive motor 1a. The first magnetic sub-piece 541 in the second group of magnetic pieces 54 may further cooperate with the first sub-coil 3221 of the second drive coil 322 to generate first driving force in the Z-axis direction. The second magnetic sub-piece 542 in the second group of magnetic pieces 54 may further cooperate with the second sub-coil 3222 of the second drive coil 322 to generate second driving force in the Z-axis direction. A direction of the first driving force is the same as a direction of the second driving force. In this way, the first magnetic sub-piece 541 and the second magnetic sub-piece 542 in the second group of magnetic pieces 54 may respectively cooperate with the first sub-coil 3221 and the second sub-coil 3222, to jointly drive the first bracket 51 to rotate around the first axis R1 relative to the second bracket 52. In this case, the second group of magnetic pieces 54 and the second drive coil 322 may jointly form a first drive mechanism of the drive motor 1a.

In another implementation, the first group of magnetic pieces 53 and the first drive coil 321 may alternatively be disposed on a side that is of the first bracket 51 and that faces away from the light inlet 20a. The first group of magnetic pieces 53 may generate driving force in the X-axis direction with the first drive coil 321, to drive the first bracket 51 to rotate around the first axis R1 relative to the second bracket 52. Alternatively, positions of the first group of magnetic pieces 53 and the first drive coil 321 may not be changed, and a fourth group of magnetic pieces and a third drive coil may be disposed on the side that is of the first bracket 51 and that faces away from the light inlet 20a. The fourth group of magnetic pieces may cooperate with the third drive coil to generate driving force in the X-axis direction. In this way, the first group of magnetic pieces 53 and the fourth group of magnetic pieces may cooperate with the first drive coil 321 and the third drive coil respectively, to jointly drive the first bracket 51 to rotate around the first axis R1 relative to the second bracket 52. This helps increase driving force for rotation of the first bracket 51 relative to the second bracket 52, and implements large-angle image stabilization.

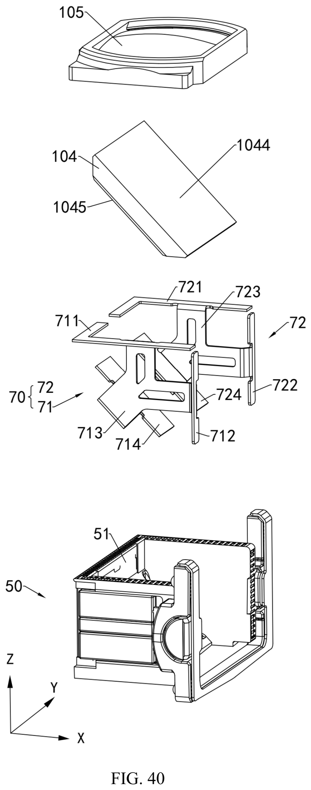

FIG. 39 is a diagram of a cross-sectional structure of the image stabilization assembly 1 shown in FIG. 3 that is cut along B1-B1 according to another implementation. FIG. 40 is a diagram of a partial exploded structure of the image stabilization assembly 1 shown in FIG. 39.

As shown in FIG. 39 and FIG. 40, a structure of the image stabilization assembly 1 in this implementation is approximately the same as a structure of the image stabilization assembly 1 shown in FIG. 3. The same part is not described again. The following mainly describes a difference between the two. The optical path folding element 104 of the image stabilization assembly 1 in this implementation may be a reflective plane mirror. The reflective plane mirror may include a reflective surface 1044 and a mounting surface 1045 that are disposed opposite to each other. The reflective surface 1044 of the reflective plane mirror may face the light inlet 20a and the light outlet 20b. The mounting surface 1045 of the optical path folding element 104 may face the mounting oblique surface 511a of the first bracket 51. The mounting surface 1045 of the optical path folding element 104 may be fastened to the mounting oblique surface 511a of the first bracket 51. The reflective surface 1044 of the optical path folding element 104 may be disposed at an included angle with a surface that is of the first lens 105 and that faces the optical path folding element 104. For example, the reflective surface 1044 may be disposed at a 45° included angle with the surface that is of the first lens 105 and that faces the optical path folding element 104. In this case, the reflective surface 1044 of the reflective plane mirror may form the reflective surface 102 of the first optical element 1b.

It may be understood that, in a design in which an image stabilization assembly in which an optical path folding element is a reflecting triangular prism whose first surface, second surface, and third surface of the reflecting triangular prism are all solid surfaces, and light transmission between the first surface and the third surface occurs inside the reflecting triangular prism. Due to higher refractive index inside the reflecting triangular prism, a required optical path of the entire camera module increases, a focusing path of a focusing component is long, and an overall size of a module is large. In contrast, in this implementation, the optical path folding element 104 is a reflective plane mirror, with its reflective surface 1044 exposed to air. In this way, light transmission between the light inlet 20a and the light outlet 20b is located in the air. A low refractive index in the air helps reduce an optical path requirement of the camera module 100, so that the focusing path of the focusing component 2 can be shortened. This helps reduce an overall size of the module in the X-axis direction, to implement miniaturization of the camera module 100.

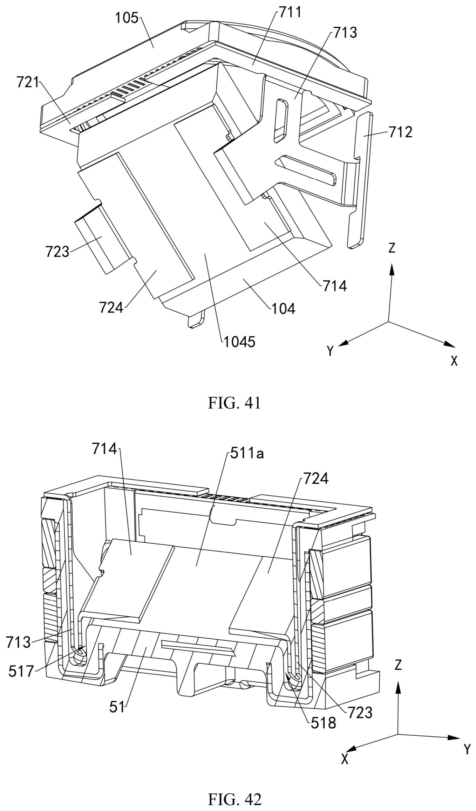

In some implementations, as shown in FIG. 40 to FIG. 42, FIG. 41 is a diagram of an assembled structure of the first optical element 1b and an optical mounting piece 70 of the image stabilization assembly 1 shown in FIG. 40. FIG. 42 is a diagram of a cross-sectional structure of an assembled structure of the optical mounting piece 70 of the image stabilization assembly 1b shown in FIG. 40 and a partial structure of the drive motor 1a according to some implementations.

For example, the drive motor 1a may further include the optical mounting piece 70. The optical mounting piece 70 may be a steel sheet. Strength of the optical mounting piece 70 may be greater than strength of a part in which the mounting oblique surface 511a of the first bracket 51 is located. At least a part of the optical mounting piece 70 may be located between the optical path folding element 104 and the mounting oblique surface 511a. In other words, the optical path folding element 104 may be indirectly fastened to the mounting oblique surface 511a through the optical mounting piece 70. In this way, in comparison with a design in which the optical path folding element 104 is in direct contact with the mounting oblique surface 511a of the first bracket 51, strength of the part in which the mounting oblique surface 511a of the first bracket 51 is located is low, and the part in which the mounting oblique surface 511a is located is easily deformed due to impact or in a high-temperature environment, thereby affecting surface shape precision of a contact surface (which is also the mounting surface 1045 of the optical path folding element 104 in this implementation) between the optical path folding element 104 and the mounting oblique surface 511a, and reducing optical quality. In this implementation, the optical path folding element 104 is indirectly fastened to the mounting oblique surface 511a through the optical mounting piece 70, and the optical path folding element 104 is not in direct contact with the mounting oblique surface 511a. In addition, strength of the optical mounting piece 70 is high, and the optical mounting piece 70 is not easily deformed due to impact or in a high-temperature environment. This helps ensure surface shape precision of a contact surface (which is also the mounting surface 1045 of the optical path folding element 104 in this implementation) between the optical path folding element 104 and the optical mounting piece 70, and ensures optical quality of the optical path folding element 104. In another implementation, the optical mounting piece 70 may alternatively be an adhesive layer. The optical path folding element 104 may be bonded and fastened to the mounting oblique surface 511a through the optical mounting piece 70.

For example, the optical mounting piece 70 may include a first mounting piece 71 and a second mounting piece 72. The first mounting piece 71 may include a first limiting part 711, a second limiting part 712, a connection part 713, and a mounting part 714. The first limiting part 711 of the first mounting piece 71 may be fastened to a surface of the bottom 10b that is of the first bracket 51 and that faces away from the base 10. The second limiting part 712 of the first mounting piece 71 may be fastened to a surface that is of the first side wall 512 of the first bracket 51 and that faces away from the third side wall 514. The mounting part 714 of the first mounting piece 71 may be fastened to the mounting oblique surface 511a of the first bracket 51. The connection part 713 of the first mounting piece 71 may be connected among the first limiting part 711, the second limiting part 712, and the mounting part 714. It should be understood that a structure of the second mounting piece 72 is approximately the same as the structure of the first mounting piece 71. The same part is not described again. The second limiting part 712 of the second mounting piece 72 may be fastened to a surface that is of the second side wall 513 and that faces away from the third side wall 514. The mounting surface 1045 of the optical path folding element 104 may be fastened to a surface of the mounting part 714 that is of the first mounting piece 71 and that faces away from the mounting oblique surface 511a and a surface of the mounting part 724 that is of the second mounting piece 72 and that faces away from the mounting oblique surface 511a. The first lens 105 may be fastened to the first limiting part 711 of the first mounting piece 71 and the first limiting part 721 of the second mounting piece 72.

It may be understood that, in a design in which the optical mounting piece 70 is a single integral piece, in other words, the first mounting piece 71 and the second mounting piece 72 are integrally formed. When the drive motor 1a is impacted, stress of the optical mounting piece 70 is concentrated, and is transmitted inward to the first optical element 1b. As a result, the first optical element 1b is pulled, surface shape precision of the first optical element 1b is affected, and optical quality is reduced. In contrast, in this implementation, the optical mounting piece 70 is disposed as the first mounting piece 71 and the second mounting piece 72 that are independent of each other and that are separately disposed. In this way, when the drive motor 1a is impacted, the first mounting piece 71 and the second mounting piece 72 may respectively bear stress in different directions, so that pulling of the first optical element 1b due to the stress in different directions can be avoided, surface shape precision of the first optical element 1b is reduced, and optical quality is affected.

In addition, the optical mounting piece 70 cooperates with the first bracket 51 by disposing a plurality of limiting parts, so that a fastening area among the optical mounting piece 70, the first bracket 51, and the first optical element 1b is increased, which helps improve structural stability among the optical mounting piece 70, the first optical element 1b, and the mover 50. In addition, disposing the plurality of limiting parts also facilitates positioning and assembly among the optical mounting piece 70, the first optical element 1b, and the mover 50, which helps improve assembly precision.

For example, the connection part 713 of the first mounting piece 71 may be bent in a direction away from the mounting part 714. In this case, the connection part 713 of the first mounting piece 71 may be approximately bent into a "U" shape. The first bracket 51 may be further provided with a fourth avoidance hole 517. A part of the connection part 713 of the first mounting piece 71 may be located in the fourth avoidance hole 517. In this way, a part of the first mounting piece 71 is bent, so that the first mounting piece 71 may further have functions of buffering and releasing stress. This can effectively improve overall structural stability of the image stabilization assembly 1. In addition, the first bracket 51 is further provided with the fourth avoidance hole 517 configured to avoid the connection part 713 of the first mounting piece 71, so that a structure between the first mounting piece 71 and the first bracket 51 is more compact. This helps implement miniaturization of the drive motor 1a.

For example, the connection part 713 of the second mounting piece 72 may be bent in a direction away from the mounting part 714. In this case, the connection part 713 of the second mounting piece 72 may be also approximately bent into a "U" shape. The first bracket 51 may be further provided with a fifth avoidance hole 518. A part of the connection part 713 of the second mounting piece 72 may be located in the fifth avoidance hole 518.

In some implementations, the connection part 713 of the first mounting piece 71 may be provided with one or more through holes, so that the first mounting piece 71 can better buffer and release stress.

The foregoing specifically describes, with reference to the related accompanying drawings, an implementation of the mover 50 of the drive motor 1a, and disposing of the drive motor 1a including the mover 50 in a plurality of image stabilization assemblies 1. The following further describes several manners of disposing the mover 50 of the drive motor 1a with reference to related accompanying drawings.

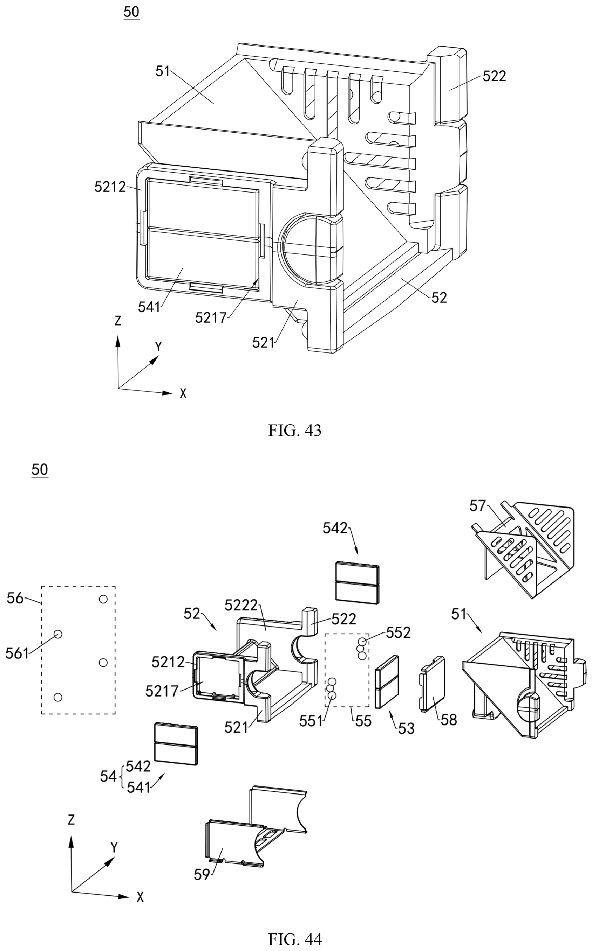

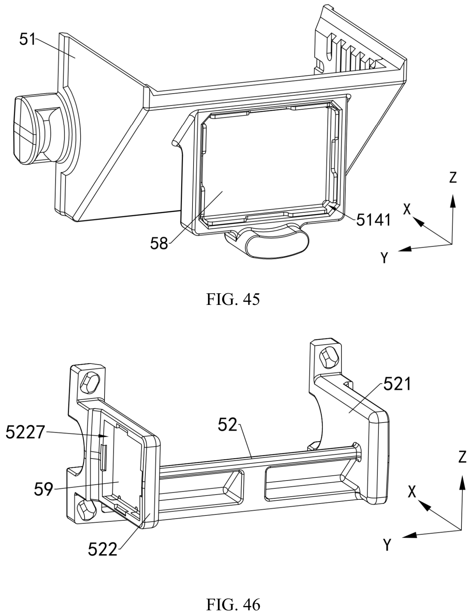

In a second implementation, technical content the same as that in the first implementation is not described again. FIG. 43 is a diagram of a structure of the mover 50 shown in FIG. 20 according to the second implementation. FIG. 44 is a diagram of an exploded structure of the mover 50 shown in FIG. 43. FIG. 45 is a diagram of a structure of the first bracket 51 of the mover 50 shown in FIG. 44 from another perspective. FIG. 46 is a diagram of a structure of the second bracket 52 of the mover 50 shown in FIG. 44 from another perspective.

As shown in FIG. 43 to FIG. 46, the first bracket 51 in this implementation may not be provided with a first mounting slot and a second mounting slot. The second bracket 52 may be further provided with a fourth mounting slot 5217 and a fifth mounting slot 5227. The fourth mounting slot 5217 may be provided in a middle part 5212 of the first part 521 of the second bracket 52. An opening of the fourth mounting slot 5217 may be formed on a surface that is of the middle part 5212 of the first part 521 and that faces away from the second part 522. The fifth mounting slot 5227 may be provided in a middle part 5222 of the second part 522 of the second bracket 52. An opening of the fifth mounting slot 5227 may be formed on a surface that is of the middle part 5222 of the second part 522 and that faces away from the first part 521. In some implementations, the mover 50 may further include a magnetic conductive piece 58. The magnetic conductive piece 58 may be fastened to the third mounting slot 5141 of the first bracket 51.

For example, the mover 50 may further include a second reinforcement piece 59. The second reinforcement piece 59 may be a steel sheet. The second reinforcement piece 59 may have magnetic conductivity. The second reinforcement piece 59 may be embedded in the second bracket 52 through injection-molding or the like. A part of the second reinforcement piece 59 may be exposed through the fourth mounting slot 5217 and the fifth mounting slot 5227.

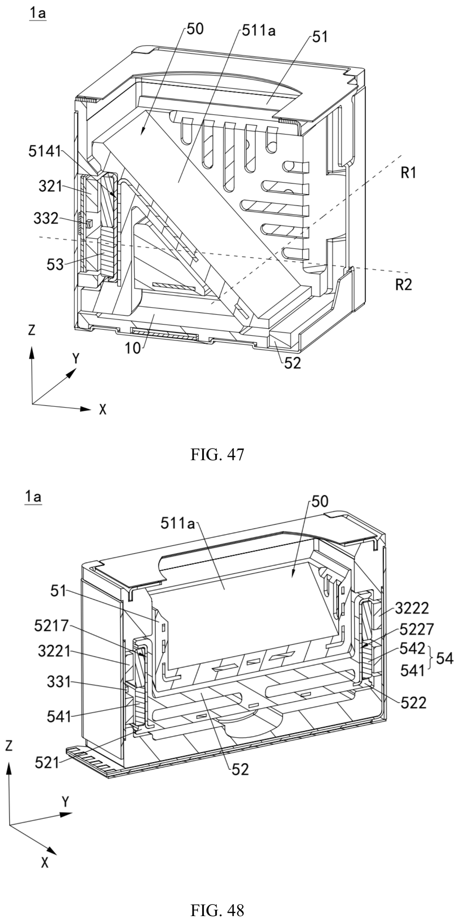

FIG. 47 is a diagram of a cross-sectional structure of the drive motor 1a shown in FIG. 10 that is cut along D-D according to the second implementation. FIG. 48 is a diagram of a cross-sectional structure of the drive motor 1a shown in FIG. 10 that is cut along C-C according to the second implementation.

As shown in FIG. 47 and FIG. 48, both the first magnetic sub-piece 541 and the second magnetic sub-piece 542 in the second group of magnetic pieces 54 may be fastened to the second bracket 52, and are respectively located in the fourth mounting slot 5217 and the fifth mounting slot 5227. The first group of magnetic pieces 53 may be fastened to the first bracket 51, and are located in the third mounting slot 5141. In this case, the first group of magnetic pieces 53 and the mounting oblique surface 511a of the first bracket 51 may be arranged in a second direction (which is also the X-axis direction in this implementation). The first magnetic sub-piece 541, the mounting oblique surface 511a of the first bracket 51 and the second magnetic sub-piece 542 may be sequentially arranged in a third direction (which is also the Y-axis direction in this implementation).

When a signal is applied to the first drive coil 321, the first group of magnetic pieces 53 may cooperate with the first drive coil 321 to generate driving force in the Z-axis direction, so that the first bracket 51 may be driven to rotate around the first axis R1 relative to the second bracket 52, that is, the first bracket 51 rotates around the first axis R1 relative to the stator. In other words, the first optical element 1b may rotate around the first axis R1 relative to the stator under action of the mover 50, to implement image stabilization.

When a signal is applied to the second drive coil 322, the first magnetic sub-piece 541 in the second group of magnetic pieces 54 may cooperate with the first sub-coil 3221 of the second drive coil 322 to generate first driving force in the Z-axis direction. The second magnetic sub-piece 542 in the second group of magnetic pieces 54 may cooperate with the second sub-coil 3222 of the second drive coil 322 to generate second driving force in the Z-axis direction. A direction of the first driving force is opposite to a direction of the second driving force, so that the second bracket 52 can be driven to drive the first bracket 51 to rotate around the second axis R2 relative to the base 10. In other words, the second bracket 52 can drive the first bracket 51 to rotate around the second axis R2 relative to the stator. In other words, the first optical element 1b may rotate around the second axis R2 relative to the stator under action of the mover 50, to implement image stabilization.

It may be understood that, in this implementation, the second group of magnetic pieces 54 of the mover 50 are fastened to the second bracket 52, so that driving force generated through cooperation between the second group of magnetic pieces 54 and the second drive coil 322 can be directly applied to the second bracket 52, and is not interfered with by an error such as assembly between the first bracket 51 and the second bracket 52. This helps improve image stabilization precision of the drive motor 1a.

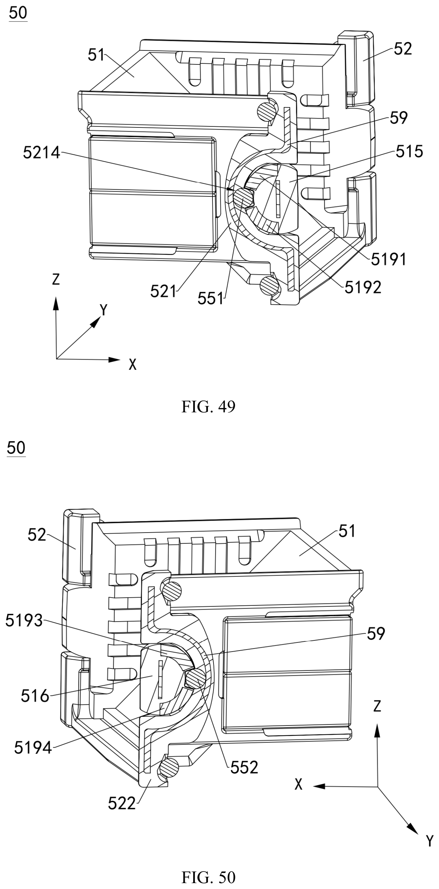

In a third implementation, technical content the same as that in the first implementation is not described again. FIG. 49 is a diagram of a cross-sectional structure of the mover 50 shown in FIG. 20 that is cut along F1-F1 according to the third implementation. FIG. 50 is a diagram of a cross-sectional structure of the mover 50 shown in FIG. 20 that is cut along F2-F2 according to the third implementation.

As shown in FIG. 49 and FIG. 50, there may be one first ball 551 in this implementation. The first connection part 515 of the first bracket 51 may be rotatably connected to the first part 521 of the second bracket 52 through the one first ball 551. For example, the first ball 551 may be fastened in the first guide groove 5214 of the first part 521. A part of the first ball 551 may be located in the first sliding groove 5152 of the first connection part 515.

For example, the mover 50 may further include a first magnetic piece 5191 and a second magnetic piece 5192. Shapes and sizes of the first magnetic piece 5191 and the second magnetic piece 5192 may be the same. The first magnetic piece 5191 and the second magnetic piece 5192 may be both fastened to the first connection part 515 of the first bracket 51 (for example, the first magnetic piece 5191 and the second magnetic piece 5192 are both embedded in the first connection part 515). The first magnetic piece 5191 and the second magnetic piece 5192 may be arranged in the Z-axis direction. The first magnetic piece 5191 may be located on a side that is of the second magnetic piece 5192 and that is close to the light outlet 20b (refer to FIG. 32). The first ball 551 may be located between the first magnetic piece 5191 and the second magnetic piece 5192. In other words, the first sliding groove 5152 may be located between the first magnetic piece 5191 and the second magnetic piece 5192. The first magnetic piece 5191 and the second magnetic piece 5192 may be symmetrically disposed with respect to the first ball 551.

For example, the mover 50 may further include a second reinforcement piece 59. The second reinforcement piece 59 may be a steel sheet. The second reinforcement piece 59 may have magnetic conductivity, in other words, the second reinforcement piece 59 may form a magnetic attraction sheet. The second reinforcement piece 59 may be embedded in the second bracket 52 through injection-molding or the like. Apart of the second reinforcement piece 59 may be located in the first part 521 of the second bracket 52. In this case, the second reinforcement piece 59 may be disposed opposite to the first magnetic piece 5191, and is disposed opposite to the second magnetic piece 5192. First magnetic attraction force may be generated between the first magnetic piece 5191 and the second reinforcement piece 59. Second magnetic attraction force may be generated between the second magnetic piece 5192 and the second reinforcement piece 59. A component of the first magnetic attraction force in the Z-axis direction may be equal to and opposite to a component of the second magnetic attraction force in the Z-axis direction. A component of the first magnetic attraction force in the X-axis direction may cooperate with a component of the second magnetic attraction force in the X-axis direction, to provide pre-pressure for the first bracket 51, so that the first ball 551 can be in contact with the first connection part 515 of the first bracket 51 and the first part 521 of the second bracket 52.

For example, there may also be one second ball 552. The second connection part 516 of the first bracket 51 may be slidably connected to the second part 522 of the second bracket 52 through the one second ball 552. The mover 50 may further include a third magnetic piece 5193 and a fourth magnetic piece 5194. For disposition of the third magnetic piece 5193 and the fourth magnetic piece 5194, refer to disposition of the first magnetic piece 5191 and the second magnetic piece 5192. Details are not described herein again.

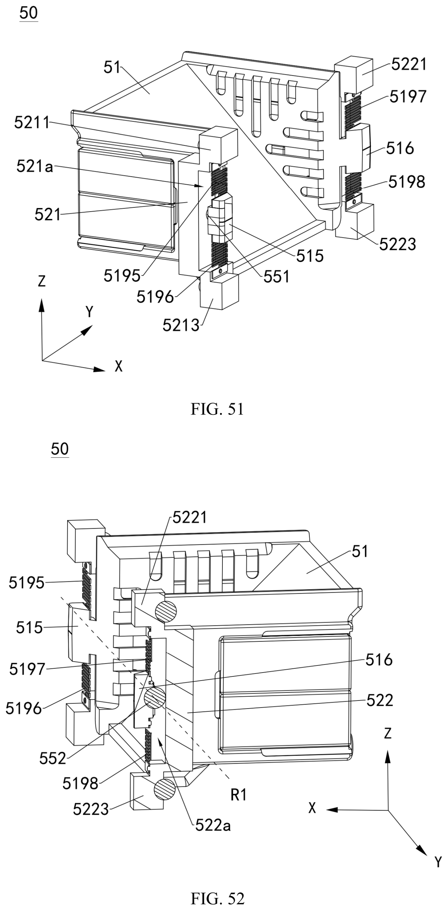

In a fourth implementation, technical content the same as that in the first implementation is not described again. FIG. 51 is a diagram of a structure of the mover 50 shown in FIG. 20 according to the fourth implementation. FIG. 52 is a diagram of a cross-sectional structure of the mover 50 shown in FIG. 20 that is cut along F2-F2 according to the fourth implementation.

As shown in FIG. 51 and FIG. 52, there may be one first ball 551 in this implementation. The first ball 551 may be fastened to the first connection part 515 of the first bracket 51 through soldering or the like. The mover 50 may further include a first upper elastic piece 5195 and a first lower elastic piece 5196. Both the first upper elastic piece 5195 and the first lower elastic piece 5196 may be spring plates. The first upper elastic piece 5195 may be connected between the first end part 5211 of the first part 521 of the second bracket 52 and the first connection part 515 of the first bracket 51. The first lower elastic piece 5196 may be connected between the second end part 5213 of the first part 521 of the second bracket 52 and the first connection part 515 of the first bracket 51. In this case, both the first connection part 515 and the first ball 551 may be located between the first upper elastic piece 5195 and the first lower elastic piece 5196. The first ball 551 may be in contact with a wall surface of the first space 521a of the first part 521 under action of the first upper elastic piece 5195 and the first lower elastic piece 5196, that is, keep in contact with the first part 521. For example, stiffness of the first upper elastic piece 5195 may be greater than stiffness of the first lower elastic piece 5196. In this way, the first upper elastic piece 5195 may overcome an influence of gravity of the first bracket 51, and keep the first ball 551 disposed in the middle.

For example, there may also be one second ball 552. The second ball 552 may be fastened to the second connection part 516 of the first bracket 51 through soldering or the like. The mover 50 may further include a second upper elastic piece 5197 and a second lower elastic piece 5198. For disposition of the second upper elastic piece 5197 and the second lower elastic piece 5198, refer to disposition of the first upper elastic piece 5195 and the first lower elastic piece 5196. Details are not described herein again. In this case, the second ball 552 may be in contact with a wall surface of the second space 522a of the second part 522 under action of the second upper elastic piece 5197 and the second lower elastic piece 5198, that is, keep in contact with the second part 522 of the second bracket 52. A straight line on which a connection line between a ball center of the first ball 551 and a ball center of the second ball 552 is located may coincide with the first axis R1. For example, stiffness of the second upper elastic piece 5197 may be greater than stiffness of the second lower elastic piece 5198. In this way, the second upper elastic piece 5197 may overcome the influence of the gravity of the first bracket 51, and keep the second ball 552 disposed in the middle.

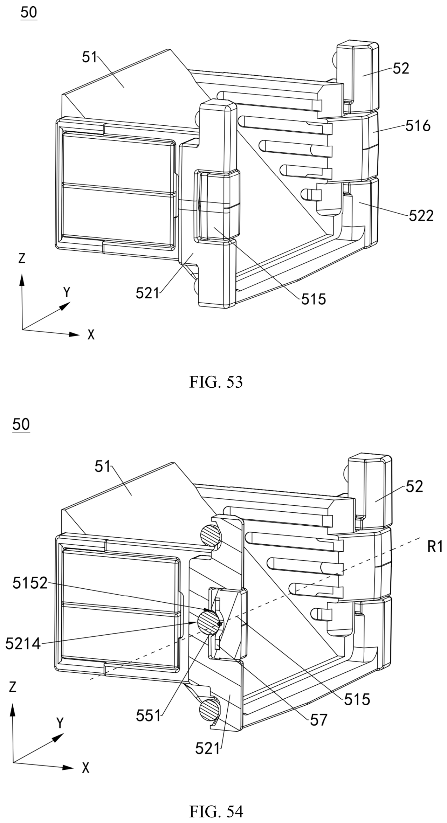

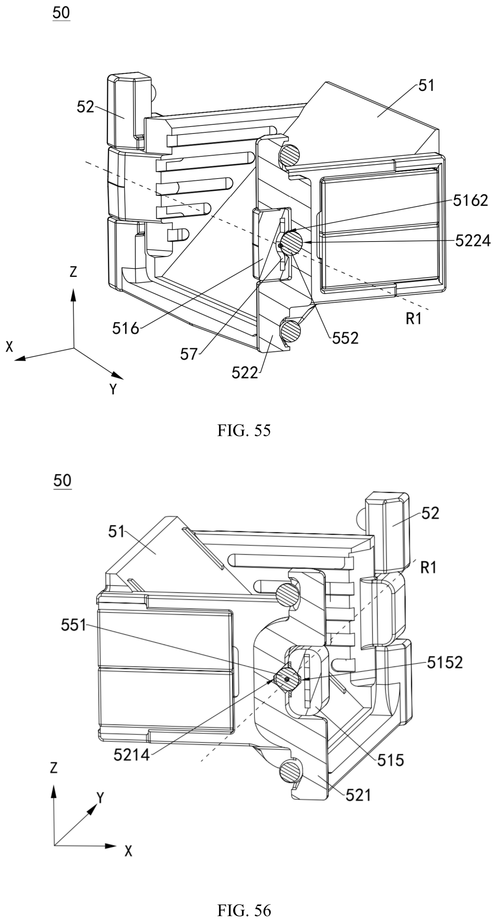

In a fifth implementation, technical content the same as that in the first implementation is not described again. FIG. 53 is a diagram of a structure of the mover 50 shown in FIG. 20 according to the fifth implementation. FIG. 54 is a diagram of a cross-sectional structure of the mover 50 shown in FIG. 20 that is cut along F1-F1 according to the fifth implementation. FIG. 55 is a diagram of a cross-sectional structure of the mover 50 shown in FIG. 20 that is cut along F2-F2 according to the fifth implementation.

As shown in FIG. 53 to FIG. 55, there may be one first ball 551 in this implementation. The first ball 551 may be fastened in the first guide groove 5214 of the first part 521 of the second bracket 52. The first connection part 515 of the first bracket 51 may be rotatably connected to the first part 521 of the second bracket 52 through the one first ball 551. In this case, the first ball 551 may form point contact with a groove wall of the first sliding groove 5152 of the first connection part 515. There may also be one second ball 552. The second ball 552 may be fastened in the second guide groove 5224 of the second part 522 of the second bracket 52. The second connection part 516 of the first bracket 51 may be rotatably connected to the second part 522 of the second bracket 52 through the second ball 552. In this case, the second ball 552 may form point contact with a groove wall of the second sliding groove 5162 of the second connection part 516. A straight line on which a connection line between a contact point of the first ball 551 and a contact point of the second ball 552 and the first bracket 51 is located may coincide with the first axis R1. In this way, when the first bracket 51 rotates around the first axis R1 relative to the second bracket 52, the first ball 551 and the first bracket 51 are in point contact to form rolling friction, and the second ball 552 and the first bracket 51 are also in point contact to form rolling friction, so that friction force between each of the first ball 551 and the second ball 552 and the first bracket 51 can be effectively reduced, and smoothness of rotation of the first bracket 51 relative to the second bracket 52 can be improved.

In some implementations, as shown in FIG. 56, the first ball 551 may be further fastened to the first sliding groove 5152 of the first connection part 515. The first sliding groove 5152 may be a "V"-shaped groove. The first guide groove 5214 may also be a "V"-shaped groove. In this case, there are two contact points between the first ball 551 and a groove wall of the first guide groove 5214, and sliding friction may be formed. A ball center of the first ball 551 is located on the first axis R1 of the mover 50. In some other implementations, the first ball 551 may be further fastened to the first guide groove 5214 through bonding, soldering, or the like. In this case, there may be two contact points between the first ball 551 and a groove wall of the first sliding groove 5152, and sliding friction may be formed.

It should be noted that features in implementations of this application may be combined with each other when there is no conflict, and any combination of features in different implementations also falls within the protection scope of this application. In other words, the plurality of implementations described above may alternatively be combined according to an actual requirement.

It should be noted that all the foregoing accompanying drawings are example figures of this application, and do not represent actual sizes of products. In addition, a size proportional relationship between components in the accompanying drawings is not intended to limit an actual product in this application either.

The foregoing descriptions are merely some implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A drive motor (1a) having a light inlet (20a) and a light outlet (20b), wherein the drive motor (1a) comprises:
a base (10);
a first bracket (51) movably connected to the base (10), wherein the first bracket (51) comprises a mounting oblique surface (511a), a side that is of the mounting oblique surface (511a) and that faces the light inlet (20a) and the light outlet (20b) is a mounting side (51b), and the mounting side (51b) is configured to mount a first optical element (1b); and
a first drive mechanism, configured to drive the first bracket (51) to rotate around a first axis (R1) relative to the base (10), wherein the first axis (R1) is parallel to the mounting oblique surface (511a), wherein
light is emitted into the drive motor (1a) from the light inlet (20a) in a first direction, the light is emitted out of the drive motor (1a) from the light outlet (20b) in a second direction after reflecting off the first optical element (1b), the first direction intersects with the second direction, and the first axis (R1) is located on the mounting side (51b) of the mounting oblique surface (511a), and is perpendicular to a plane on which the first direction and the second direction are located.

2. The drive motor (1a) according to claim 1, wherein the drive motor (1a) further comprises a second bracket (52) and a second drive mechanism, the second bracket (52) is movably connected between the base (10) and the first bracket (51), the second drive mechanism is configured to drive the second bracket (52) and the first bracket (51) to rotate around a second axis (R2) relative to the base (10), and the second axis (R2) passes through the mounting oblique surface (511a) and is parallel to the second direction.

3. The drive motor (1a) according to claim 2, wherein a first connection part (515) and a second connection part (516) are disposed on a side that is of the first bracket (51) and that is close to the light outlet (20b), the first connection part (515) and the second connection part (516) are disposed opposite to and spaced from each other, and an arrangement direction of the first connection part (515) and the second connection part (516) is parallel to the first axis (R1); and
the drive motor (1a) further comprises a first group of support pieces (55), the first group of support pieces (55) comprise a plurality of first support pieces, a part of the first support pieces are connected between the first connection part (515) and the second bracket (52), and another part of the first support pieces are connected between the second connection part (516) and the second bracket (52).

4. The drive motor (1a) according to claim 3, wherein the first axis (R1) passes through the first connection part (515) and the second connection part (516).

5. The drive motor (1a) according to claim 3 or 4, wherein the second bracket (52) comprises a first part (521) and a second part (522) that are disposed opposite to each other, the first part (521) is located between the first connection part (515) and the base (10), and the second part (522) is located between the second connection part (516) and the base (10); and
the drive motor (1a) further comprises a second group of support pieces (56), the second group of support pieces (56) comprise a plurality of second support pieces, the first part (521) is rotatably connected to the base (10) through a part of the second support pieces, the second part (522) is rotatably connected to the base (10) through another part of the second support pieces, and a central point of the second group of support pieces (56) is located on the mounting side (51b).

6. The drive motor (1a) according to claim 5, wherein the first connection part (515) is semi-enclosed by the first part (521), and the second connection part (516) is semi-enclosed by the second part (522).

7. The drive motor (1a) according to claim 5 or 6, wherein the first part (521) comprises a first end part (5211), a middle part (5212), and a second end part (5213), the middle part (5212) is fastened between the first end part (5211) and the second end part (5213), and the second end part (5213) is located on a side that is of the first end part (5211) and that faces away from the light inlet (20a); and
the middle part (5212) protrudes relative to the first end part (5211) and the second end part (5213) along a side facing away from the light outlet (20b), a first space (521a) is jointly enclosed by the first end part (5211), the middle part (5212), and the second end part (5213), the first connection part (515) is mounted in the first space (521a), and a part of the first support pieces are connected between the first connection part (515) and the middle part (5212).

8. The drive motor (1a) according to claim 7, wherein the drive motor (1a) further comprises a first upper elastic piece (5195) and a first lower elastic piece (5196), the first upper elastic piece (5195) is connected between the first end part (5211) and the first connection part (515), and the first lower elastic piece (5196) is connected between the second end part (5213) and the first connection part (515); and
elastic force generated by the first upper elastic piece (5195) and the first lower elastic piece (5196) keeps a part of the first support pieces in contact with a wall surface of the first space (521a).

9. The drive motor (1a) according to claim 7, wherein the drive motor (1a) further comprises a first magnetic piece (5191), a second magnetic piece (5192), and a magnetic attraction sheet (59), the first magnetic piece (5191) and the second magnetic piece (5192) are both fastened to the first connection part (515), the first magnetic piece (5191) is located on a side that is of the second magnetic piece (5192) and that is close to the light inlet (20a), the first connection part (515) is provided with a first sliding groove (5152), the first sliding groove (5152) is configured to mount a part of the first support pieces, and the first sliding groove (5152) is located between the first magnetic piece (5191) and the second magnetic piece (5192); and
the magnetic attraction sheet (59) is fastened to the first part (521), the magnetic attraction sheet (59) is disposed opposite to the first magnetic piece (5191) and the second magnetic piece (5192), and magnetic attraction force generated between each of the first magnetic piece (5191) and the second magnetic piece (5192) and the magnetic attraction sheet (59) keeps a part of the first support pieces in contact with the first part (521) and the first connection part (515).

10. The drive motor (1a) according to any one of claims 7 to 9, wherein a part of the second support pieces are connected between the first end part (5211) of the first part (521) and the base (10), and a part of the second support pieces are connected between the second end part (5213) of the first part (521) and the base (10).

11. The drive motor (1a) according to any one of claims 5 to 10, wherein the plurality of first support pieces comprise a plurality of first balls (551) and a plurality of second balls (552), the first connection part (515) is rotatably connected to the first part (521) through the plurality of first balls (551), and the second connection part (516) is rotatably connected to the second part (522) through the plurality of second balls (552); and
a circle center of a circle on which a plurality of ball centers of the plurality of first balls (551) are located is a first rotation center (O1), a circle center of a circle on which a plurality of ball centers of the plurality of second balls (552) are located is a second rotation center (O2), and a connection line between the first rotation center (O1) and the second rotation center (O2) coincides with the first axis (R1).

12. The drive motor (1a) according to any one of claims 5 to 10, wherein the plurality of first support pieces comprise a first ball (551) and a second ball (552), the first connection part (515) is rotatably connected to the first part (521) through the first ball (551), the second connection part (516) is rotatably connected to the second part (522) through the second ball (552), and a connection line between a ball center of the first ball (551) and a ball center of the second ball (552) coincides with the first axis (R1); or
a contact point between the first ball (551) and the first connection part (515) is a first contact point, a contact point between the second ball (552) and the second connection part (516) is a second contact point, and a connection line between the first contact point and the second contact point coincides with the first axis (R1); or
a contact point between the first ball (551) and the first part (521) is a first contact point, a contact point between the second ball (552) and the second part (522) is a second contact point, and a connection line between the first contact point and the second contact point coincides with the first axis (R1).

13. The drive motor (1a) according to claim 11 or 12, wherein the first connection part (515) is provided with the first sliding groove (5152), the first part (521) is provided with a first guide groove (5214), an opening of the first sliding groove (5152) and an opening of the first guide groove (5214) are provided opposite to each other, the first sliding groove (5152) and the first guide groove (5214) form a first ball groove (501), and at least a part of the first ball (551) is located in the first ball groove (501);
the second connection part (516) is provided with a second sliding groove (5162), the second part (522) is provided with a second guide groove (5224), an opening of the second sliding groove (5162) and an opening of the second guide groove (5224) are provided opposite to each other, the second sliding groove (5162) and the second guide groove (5224) form a second ball groove (502), and at least a part of the second ball (552) is located in the second ball groove (502); and
at least one of the first sliding groove (5152) and the second sliding groove (5162) is a V-shaped groove, and one of the first guide groove (5214) and the second guide groove (5224) is a V-shaped groove; or
at least one of the first guide groove (5214) and the second guide groove (5224) is a V-shaped groove, and one of the first sliding groove (5152) and the second sliding groove (5162) is a V-shaped groove.

14. The drive motor (1a) according to any one of claims 5 to 13, wherein the plurality of second support pieces comprise at least three third balls (561), the second bracket (52) is rotatably connected to the base (10) through the plurality of third balls (561), and a plurality of ball centers of the plurality of third balls (561) are located on a same plane; and
the second axis (R2) is perpendicular to a plane on which the plurality of ball centers of the plurality of third balls (561) are located.

15. The drive motor (1a) according to claim 14, wherein the second bracket (52) is provided with a third guide groove (5215), a fourth guide groove (5216), and a fifth guide groove (5225), the base (10) is provided with a first sliding groove (112), a second sliding groove (113), and a third sliding groove (132), an opening of the third guide groove (5215), an opening of the fourth guide groove (5216), and an opening of the fifth guide groove (5225) are provided opposite to the opening of the first sliding groove (112), the opening of the second sliding groove (113), and an opening of the third sliding groove (132) in a one-to-one correspondence, the third guide groove (5215), the fourth guide groove (5216), and the fifth guide groove (5225) respectively form a third ball groove (503), a fourth ball groove (504), and a fifth ball groove (505) with the first sliding groove (112), the second sliding groove (113), and the third sliding groove (132), and the plurality of third balls (561) are located in the third ball groove (503), the fourth ball groove (504), and the fifth ball groove (505) in a one-to-one correspondence; and
at least two of the third guide groove (5215), the fourth guide groove (5216), and the fifth guide groove (5225) are V-shaped grooves, and two of the first sliding groove (112), the second sliding groove (113), and the third sliding groove (132) are V-shaped grooves; or
at least two of the first sliding groove (112), the second sliding groove (113), and the third sliding groove (132) are V-shaped grooves, and two of the third guide groove (5215), the fourth guide groove (5216), and the fifth guide groove (5225) are V-shaped grooves.

16. The drive motor (1a) according to any one of claims 3 to 15, wherein the drive motor (1a) further comprises a first drive coil (321), a second drive coil (322), a first group of magnetic pieces (53), and a second group of magnetic pieces (54), wherein the first drive coil (321) and the second drive coil (322) are both fastened to the base (10), the first group of magnetic pieces (53) are fastened to the first bracket (51) and are located on a side that is of the first bracket (51) and that faces away from the light outlet (20b), and the first group of magnetic pieces (53) and the first drive coil (321) are disposed opposite to each other; and
the second group of magnetic pieces (54) comprise a first magnetic sub-piece (541) and a second magnetic sub-piece (542), the first magnetic sub-piece (541) and the second magnetic sub-piece (542) are both fastened to the first bracket (51), an arrangement direction of the first magnetic sub-piece (541), the mounting oblique surface (511a), and the second magnetic sub-piece (542) is parallel to the first axis (R1), the second drive coil (322) comprises a first sub-coil (3221) and a second sub-coil (3222), the first sub-coil (3221) and the first magnetic sub-piece (541) are disposed opposite to each other, and the second sub-coil (3222) and the second magnetic sub-piece (542) are disposed opposite to each other.

17. The drive motor (1a) according to any one of claims 3 to 15, wherein the drive motor (1a) further comprises a first drive coil (321), a second drive coil (322), a first group of magnetic pieces (53), and a second group of magnetic pieces (54), the first drive coil (321) and the second drive coil (322) are both fastened to the base (10), the first group of magnetic pieces (53) are fastened to the first bracket (51) and are located on a side that is of the support part (511) and that faces away from the light outlet (20b), and the first group of magnetic pieces (53) and the first drive coil (321) are disposed opposite to each other; and
the second group of magnetic pieces (54) comprise a first magnetic sub-piece (541) and a second magnetic sub-piece (542), the first magnetic sub-piece (541) and the second magnetic sub-piece (542) are both fastened to the second bracket (52), an arrangement direction of the first magnetic sub-piece (541), the mounting oblique surface (511a), and the second magnetic sub-piece (542) is parallel to the first axis (R1), the second drive coil (322) comprises a first sub-coil (3221) and a second sub-coil (3222), the first sub-coil (3221) and the first magnetic sub-piece (541) are disposed opposite to each other, and the second sub-coil (3222) and the second magnetic sub-piece (542) are disposed opposite to each other.

18. The drive motor (1a) according to claim 16 or 17, wherein the first drive coil (321) and the first group of magnetic pieces (53) form the first drive mechanism, and the second drive coil (322) and the second group of magnetic pieces (54) form the second drive mechanism; or
the first drive coil (321) and the first group of magnetic pieces (53) form the second drive mechanism, and the second drive coil (322) and the second group of magnetic pieces (54) form the first drive mechanism.

19. The drive motor (1a) according to any one of claims 16 to 18, wherein the drive motor (1a) further comprises a magnetic attraction member (40), the magnetic attraction member (40) is fastened to the base (10), a projection of the magnetic attraction member (40) in a direction parallel to the second axis (R2) at least partially overlaps with the first group of magnetic pieces (53), and the first bracket (51) squeezes the second bracket (52) under action force between the magnetic attraction member (40) and the first group of magnetic pieces (53).

20. The drive motor (1a) according to any one of claims 3 to 19, wherein the first bracket (51) further comprises a support part (511), a first side wall (512), and a second side wall (513), the first side wall (512) and the second side wall (513) are disposed opposite to and spaced from each other, an arrangement direction of the first side wall (512) and the second side wall (513) is parallel to the first axis (R1), the support part (511) is connected between the first side wall (512) and the second side wall (513), a mounting space (51a) is enclosed by the support part (511), the first side wall (512), and the second side wall (513), a surface that is of the support part (511) and that faces the mounting space (51a) forms the mounting oblique surface (511a) of the first bracket (51), and the mounting space (51a) is configured to mount the first optical element (1b); and
the first connection part (515) is located on a side that is of the first side wall (512) and that faces away from the second side wall (513), and is fastened to an end part that is of the first side wall (512) and that faces the light outlet (20b), and the second connection part (516) is located on a side that is of the second side wall (513) and that faces away from the first side wall (512), and is fastened to an end part that is of the second side wall (513) and that is close to the light outlet (20b).

21. The drive motor (1a) according to claim 20, wherein the drive motor (1a) further comprises a base plate (22), the base plate (22) comprises a main body part (221) and an extension part (222) that are connected to each other, the main body part (221) is fastened to a surface that is of the base (10) and that faces away from the light inlet (20a), the extension part (222) and the first side wall (512) are disposed opposite to each other, and an arrangement direction of the extension part (222) and the first side wall (512) is parallel to the second axis (R2); and
the extension part (222) is provided with a first protrusion (2221), the first protrusion (2221) faces the first side wall (512), the first side wall (512) is provided with a first limiting groove (512a), and at least a part of the first protrusion (2221) is located in the first limiting groove (512a).

22. The drive motor (1a) according to any one of claims 1 to 21, wherein an anti-collision protrusion (5142) is disposed on a side that is of the first bracket (51) and that faces away from the light outlet (20b), the base (10) is provided with a limiting hole (122), and at least a part of the anti-collision protrusion (5142) is located in the limiting hole (122).

23. The drive motor (1a) according to any one of claims 1 to 22, wherein a spacing between the first axis (R1) and the mounting oblique surface (511a) is greater than 0.01 millimeter; and/or the spacing between the first axis (R1) and the mounting oblique surface (511a) is greater than or equal to 5 millimeters.

24. The drive motor (1a) according to claim 1, wherein the first bracket (51) and the light inlet (20a) are arranged in the first direction, the first bracket (51) and the light outlet (20b) are arranged in the second direction, a first connection part (515) and a second connection part (516) are disposed on a side that is of the first bracket (51) and that is close to the light outlet (20b), the first connection part (515) and the second connection part (516) are disposed opposite to and spaced from each other, and an arrangement direction of the first connection part (515) and the second connection part (516) is parallel to the first axis (R1); and
the drive motor (1a) further comprises a first group of support pieces (55), the first group of support pieces (55) comprise a plurality of first support pieces, the first connection part (515) is rotatably connected to the base (10) through a part of the first support pieces, and the second connection part (516) is rotatably connected to the base (10) through another part of the first support pieces.

25. An image stabilization assembly (1), comprising a first optical element (1b) and the drive motor (1a) according to any one of claims 1 to 24, wherein the first optical element (1b) comprises an optical path folding element (104), the optical path folding element (104) comprises a first surface (1041), a second surface (1042), and a third surface (1043), the first surface (1041) is perpendicular to the third surface (1043), the second surface (1042) is disposed facing the first surface (1041) and the third surface (1043), and is connected to the first surface (1041) and the second surface (1042), the first surface (1041) and the third surface (1043) are both transmission surfaces, the second surface (1042) is a reflective surface, the first surface (1041) and the light inlet (20a) are disposed opposite to each other, and the third surface (1043) and the light outlet (20b) are disposed opposite to each other; and
the first optical element (1b) has a light incident axis (T1) and a light emergent axis (T2), the light incident axis (T1) is parallel to the first direction, and the light emergent axis (T2) is parallel to the second direction.

26. An image stabilization assembly (1), comprising a first optical element (1b) and the drive motor (1a) according to any one of claims 1 to 24, wherein the first optical element (1b) comprises an optical path folding element (104), the optical path folding element (104) comprises a reflective surface (1044) and a mounting surface (1045), the reflective surface (1044) and the mounting surface (1045) are disposed opposite to each other, the mounting surface (1045) faces the mounting oblique surface (511a) of the first bracket (51), and is fastened to the mounting oblique surface (511a), and the reflective surface (1044) is disposed facing away from the mounting oblique surface (511a); and
the first optical element (1b) has a light incident axis (T1) and a light emergent axis (T2), the light incident axis (T1) is parallel to the first direction, and the light emergent axis (T2) is parallel to the second direction.

27. The image stabilization assembly (1) according to claim 26, wherein the drive motor (1a) further comprises an optical mounting piece (70), at least a part of the optical mounting piece (70) is fastened between the optical path folding element (104) and the mounting oblique surface (511a), and strength of the optical mounting piece (70) is greater than strength of a part in which the mounting oblique surface (511a) of the first bracket (51) is located.

28. The image stabilization assembly (1) according to claim 27, wherein the optical mounting piece (70) comprises a first mounting piece (71) and a second mounting piece (72), the first mounting piece (71) and the second mounting piece (72) are spaced from each other, at least a part of the first mounting piece (71) is fastened between the optical path folding element (104) and the mounting oblique surface (511a), and at least a part of the second mounting piece (72) is fastened between the optical path folding element (104) and the mounting oblique surface (511a).

29. The image stabilization assembly (1) according to any one of claims 25 to 28, wherein the first optical element (1b) further comprises a first lens (105), the first lens (105) is located on a light incident side of the optical path folding element (104), and the first lens (105) has positive focal power.

30. The image stabilization assembly (1) according to any one of claims 25 to 29, wherein the first optical element (1b) further comprises a second lens (106), the second lens (106) is located on a light emergent side of the optical path folding element (104), and the second lens (106) has negative focal power.

31. The image stabilization assembly (1) according to any one of claims 25 to 30, wherein a projection point of the first axis (R1) on the plane on which the first direction and the second direction are located is a first point, and a spacing between the first point and the light emergent axis (T2) is less than or equal to 3 millimeters.

32. The image stabilization assembly (1) according to any one of claims 25 to 31, wherein the drive motor (1a) further comprises the second bracket (52) and the second drive mechanism, the second bracket (52) is movably connected between the base (10) and the first bracket (51), the second drive mechanism is configured to drive the second bracket (52) and the first bracket (51) to rotate around the second axis (R2) relative to the base (10), the second axis (R2) intersects with the first axis (R1), and the second axis (R2) passes through the light outlet (20b) and the mounting oblique surface (511a), and is parallel to the second direction; and
a spacing between the second axis (R2) and the light emergent axis (T2) is less than or equal to 3 millimeters.

33. The image stabilization assembly (1) according to claim 32, wherein the drive motor (1a) further comprises the second group of support pieces (56), and the second bracket (52) is slidably connected to the base (10) through the second group of support pieces (56); and
a distance between the central point of the second group of support pieces (56) and an overall center of gravity of the first bracket (51), the second bracket (52), and the first optical element (1b) is less than or equal to 0.3 millimeter.

34. A camera module (100), comprising a focusing component (2), an image sensor (3), and the image stabilization assembly (1) according to any one of claims 25 to 33, wherein the focusing component (2) is located on a light emergent side of the image stabilization assembly (1), and the image sensor (3) is located on a light emergent side of the focusing component (2).

35. An electronic device (1000), comprising a device housing (200) and the camera module (100) according to claim 34, wherein the camera module (100) is disposed in the device housing (200).
